# EUROPEAN PATENT APPLICATION

(11) **EP 4 746 223 A1**
(43) Date of publication of application: **20.05.2026**
(21) Application number: 24843305.4
(22) Date of filing: 04.06.2024
(51) Int. Cl.: H02H 5/04, G01K 7/16, H02M 1/32, G01R 15/04, G01R 1/20, H03K 17/081, H02P 29/60

(54) **HOME APPLIANCE HAVING TEMPERATURE SENSOR ARRANGED FOR PREVENTING OVERHEATING OF POWER MODULE**

(30) Priority: 14.07.2023 KR 20230092000; 23.11.2023 KR 20230164551
(71) Applicant: Samsung Electronics Co., Ltd., Suwon-si, Gyeonggi-do 16677 (KR)
(72) Inventor: KIM, Taehyuck, Suwon-si, Gyeonggi-do 16677 (KR); KANG, Jeongil, Suwon-si, Gyeonggi-do 16677 (KR); NOH, Kyoungwoong, Suwon-si, Gyeonggi-do 16677 (KR); LEE, Dahye, Suwon-si, Gyeonggi-do 16677 (KR); LEE, Donggyu, Suwon-si, Gyeonggi-do 16677 (KR); JANG, Wonseo, Suwon-si, Gyeonggi-do 16677 (KR); HONG, Myeongjae, Suwon-si, Gyeonggi-do 16677 (KR)
(74) Representative: Gulde & Partner
(86) International application number: PCT/KR2024/007636
(87) International publication number: WO 2025/018584

(57) **Abstract**

Provided is a home appliance having a temperature sensor arranged for preventing overheating of a power module. The home appliance may comprise a power module including a motor and an inverter for driving the motor. The home appliance may comprise a printed board assembly (PBA) including a processor for controlling the power module. The PBA comprises: a distribution resistor for distributing the voltage level of a predetermined input voltage; and a temperature sensor, connected in series to the distribution resistor, for sensing the temperature of the bottom surface of a power module element packaging the power module, wherein the temperature sensor is arranged at a point corresponding to a lower U-shaped plate of the inverter on the bottom surface of the power module device.

## Description

### Technical Field

An embodiment of the disclosure relates to a home appliance in which a temperature sensor is arranged on a bottom surface of a power module device in which a power module is packaged, to prevent overheating of an intelligent power module (IPM) that drives a motor used in the home appliance.

### Background Art

Home appliances may include electrical appliances and machines used in the home. According to an embodiment of the disclosure, home appliances may include devices that are fixedly arranged in the home or devices that are movable in the home. Here, the home may refer to not only a house but also an indoor space such as an office. The home appliances may include a television, a digital video disk (DVD) player, an audio device, a refrigerator, an air conditioner, a vacuum cleaner, an oven, a microwave oven, a washing machine, an air purifier, a set-top box, a home automation control panel, a security control panel, a media box (e.g., Samsung HomeSync^{™}), a game console, an electronic dictionary, an electronic key, a camcorder, an electronic picture frame, a speaker, an e-book reader, a desktop personal computer (PC), a laptop PC, a netbook computer, a workstation, a server, a personal digital assistant (PDA), a portable multimedia player (PMP), an MP3 player, a medical device, a camera, and the like. The home appliances may particularly include motor-driven home appliances. The motor-driven home appliances may include, but are not limited to, a vacuum cleaner, a cordless vacuum cleaner, a washing machine, a dryer, a refrigerator, an air purifier, a dishwasher, a fan, and an air conditioner.

An intelligent power module (IPM) is widely used as a switching device for driving the motor, and the IPM may be an intelligent power module that includes an inverter for converting direct current (DC) power into alternating current (AC) power to drive the motor, and a gate driver for supplying a gate signal to the inverter.

A method of optimally arranging a temperature sensor and a home appliance with a temperature sensor optimally arranged therein are required to protect the home appliance from overheating in the event of overheating of the IPM.

### Disclosure of Invention

### Solution to Problem

According to an embodiment of the disclosure, a home appliance with a temperature sensor arranged to prevent overheating of a power module is provided. The home appliance may include a motor and a power module including an inverter configured to drive the motor. In an embodiment, the home appliance may include a printed board assembly (PBA) including a processor configured to control the power module. In an embodiment, the PBA of the home appliance may include a distribution resistor configured to distribute a voltage level of a certain input voltage and a temperature sensor connected in series to the distribution resistor and configured to detect a temperature of a bottom surface of a power module device in which the power module is packaged, wherein the temperature sensor may be arranged at a location corresponding to a lower U-phase plate of the inverter on the bottom surface of the power module device.

According to an embodiment of the disclosure, a method of preventing overheating of a home appliance including a power module is provided. The home appliance may include a motor and a power module including an inverter configured to drive the motor. According to an embodiment, the home appliance may include a printed board assembly (PBA) including a processor configured to control the power module, a temperature sensor on a bottom surface of a power module device in which the power module is packaged, and a comparator. According to an embodiment, the temperature sensor of the home appliance may be arranged at a location at which a lower U-phase plate of the inverter included in the power module forms a boundary with an upper U, V, and W-phase plate of the inverter included in the power module. According to an embodiment of the disclosure, the method of preventing overheating of the home appliance including the power module may include an operation of detecting a temperature of the bottom surface of the power module device on which the temperature sensor is installed. According to an embodiment, the method of preventing overheating of the home appliance including the power module may include an operation of comparing, by a comparator, a voltage between a first point, which is a point at which a distribution resistor configured to distribute a certain voltage and the temperature sensor are connected in series, and a ground with a certain threshold voltage. According to an embodiment, the method of preventing overheating of the home appliance including the power module may include an operation of interrupting input alternating current (AC) power based on a change of a power control signal output from the comparator, when the temperature detected by the temperature sensor is higher than or equal to a certain temperature determined as overheating. According to an embodiment, the method of preventing overheating of the home appliance including the power module may include an operation of stopping the driving of the motor based on an overheating determination signal output from the comparator, when the temperature detected by the temperature sensor is higher than or equal to a certain temperature determined as overheating.

### Brief Description of Drawings

FIG. 1A is a perspective view of a washing machine as a home appliance according to an embodiment of the disclosure.
FIG. 1B is a cross-sectional view of a washing machine as a home appliance according to an embodiment of the disclosure.
FIG. 2 is a diagram illustrating the position of a temperature sensor in a printed board assembly (PBA) of a home appliance, according to an embodiment of the disclosure.
FIG. 3A is a circuit diagram illustrating the position of a temperature sensor in an intelligent power module (IPM), according to an embodiment of the disclosure.
FIG. 3B is a block diagram illustrating the position of a temperature sensor in an IPMdevice, according to an embodiment of the disclosure.
FIG. 3C is a diagram illustrating the position of a temperature sensor in an IPMdevice, according to an embodiment of the disclosure.
FIG. 3D is a side view illustrating the arrangement structure of a temperature sensor according to an embodiment of the disclosure.
FIG. 3E is a PBA pattern diagram illustrating the arrangement of a temperature sensor according to an embodiment of the disclosure.
FIG. 3F is a diagram illustrating the position of a temperature sensor in an IPMdevice, according to an embodiment of the disclosure.
FIG. 3G is a PBA pattern diagram illustrating the arrangement of a temperature sensor according to an embodiment of the disclosure.
FIG. 4A illustrates an overheating prevention circuit according to an embodiment of the disclosure.
FIG. 4B illustrates an overheating prevention circuit according to an embodiment of the disclosure.
FIG. 4C illustrates an overheating prevention circuit according to an embodiment of the disclosure.
FIG. 4D illustrates an overheating prevention circuit according to an embodiment of the disclosure.
FIG. 5A is a characteristic curve graph of a thermistor used as a temperature sensor in an overheating prevention circuit of a home appliance, according to an embodiment of the disclosure.
FIG. 5B is a characteristic curve graph of a thermistor used as a temperature sensor in an overheating prevention circuit of a home appliance, according to an embodiment of the disclosure.
FIG. 6 illustrates a circuit for controlling input alternating current (AC) power connection based on an overheating determination, according to an embodiment of the disclosure.
FIG. 7A is a circuit diagram illustrating an operation of controlling input AC power connection based on a power control signal, according to an embodiment of the disclosure.
FIG. 7B is a circuit diagram illustrating an operation of controlling input AC power connection based on a power control signal, according to an embodiment of the disclosure.
FIG. 8 is a diagram illustrating generating a power control signal based on an overheating determination signal, according to an embodiment of the disclosure.
FIG. 9 is a circuit diagram for interrupting a voltage regulator operation upon detection of overheating, according to an embodiment of the disclosure.
FIG. 10 is a waveform diagram of an overheating prevention operation according to an embodiment of the disclosure.
FIG. 11 is a block diagram of a home appliance according to an embodiment of the disclosure.
FIG. 12A is a perspective view of a refrigerator as a home appliance according to an embodiment of the disclosure.
FIG. 12B is a front view illustrating the interior of a refrigerator as a home appliance according to an embodiment of the disclosure.
FIG. 13 is a perspective view illustrating an air conditioner as a home appliance according to an embodiment of the disclosure.
FIG. 14 is a diagram illustrating a vacuum cleaner as a home appliance according to an embodiment of the disclosure.
FIG. 15 is a flowchart illustrating an overheating prevention operation through a temperature sensor arranged on a bottom surface of an IPMdevice, according to an embodiment of the disclosure.

### Mode for the Invention

Terms used herein will be briefly described and then embodiments of the disclosure will be described in detail.

The terms used herein are those general terms currently widely used in the art in consideration of functions in embodiments of the disclosure, but the terms may vary according to the intentions of those of ordinary skill in the art, precedents, or new technology in the art. Also, in some cases, there may be terms that are optionally selected by the applicant, and the meanings thereof will be described in detail in the corresponding embodiment of the disclosure. Thus, the terms used herein should be understood not as simple names but based on the meanings of the terms and the overall description of the disclosure.

Throughout the disclosure, the expression "at least one of a, b or c" indicates only a, only b, only c, both a and b, both a and c, both b and c, all of a, b, and c, or variations thereof.

Throughout the disclosure, when something is referred to as "including" an element, one or more other elements may be further included unless specified otherwise. Also, as used herein, the terms such as "units" and "modules" may refer to units that perform at least one function or operation, and the units may be implemented as hardware or software or a combination of hardware and software.

Also, herein, terms such as "front", "back", "top", "bottom", "side", "left", "right", "upper", and "lower" are defined based on the drawings and should be understood as meaning relative positions, and the shape and position of each component are not limited by these terms.

Hereinafter, embodiments of the disclosure will be described in detail with reference to the accompanying drawings so that those of ordinary skill in the art may easily implement the disclosure. However, embodiments of the disclosure may be embodied in many different forms and should not be construed as being limited to the embodiments set forth herein. Also, portions irrelevant to the description of the disclosure will be omitted in the drawings for a clear description of embodiments of the disclosure, and like reference numerals will denote like elements throughout the disclosure.

A washing machine may be a device that washes laundry by using power and may generally include a water tank that stores water and a drum that rotates in the water tank to separate dirt from the laundry.

Washing machines may be classified into a rotating pulsator-type washing machine and a rotating drum-type washing machine.

Alternatively, washing machines may be classified into a washing machine that includes a horizontally arranged drum and washes laundry by dropping the laundry after lifting up the laundry along the inner peripheral surface of the drum when the drum rotates about a horizontal axis, and a washing machine that includes a vertically arranged drum including a pulsator and washes laundry by using a water flow generated by the pulsator when the drum rotates about a vertical axis.

A washing machine including a drum rotating about a vertical axis may include a pulsator together with the drum to improve washing performance and may wash clothes by rotating the pulsator, and some washing machine may generate a drop of laundry by also rotating the drum and simultaneously generate friction by rotating the pulsator in the opposite direction to the drum.

Throughout the disclosure, the term "washing machine" may be used interchangeably with the term "washing machine device" or "washing machine home appliance".

Also, throughout the disclosure, a "low" signal is described merely as an example and may be interchangeably used with a "high" signal by a circuit modification, and conversely, a "high" signal may also be interchangeably used with a "low" signal by a circuit modification. Thus, in the disclosure, it should be understood that a signal operating in a "low" or "high" state may also operate in the opposite state by a logic circuit (or analog circuit) modification.

According to an embodiment of the disclosure, a method of protecting a washing machine from overheating when an intelligent power module (IPM) used for driving a motor included in a home appliance or a printed board assembly (PBA) including the IPM overheats and a home appliance using the method are required. Also, an overheating prevention method capable of interrupting input alternating current (AC) power of a home appliance and simultaneously stopping the switching of an IPM and the driving of a motor in the event of overheating is required.

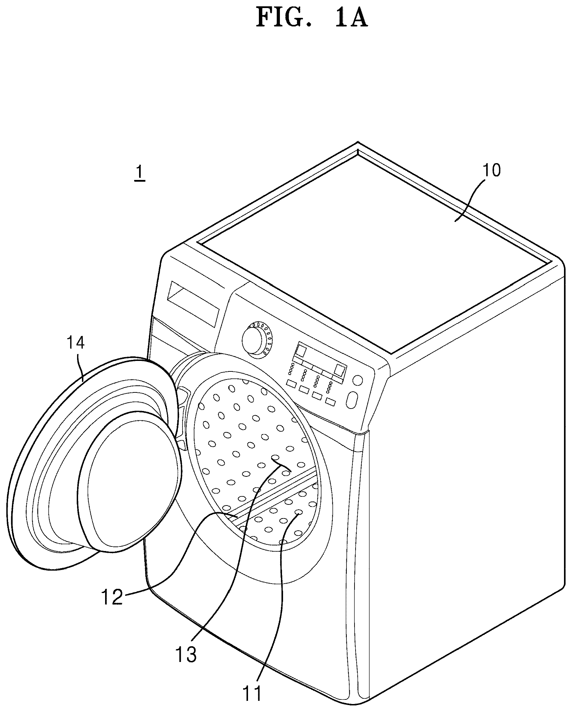

FIG. 1A is a perspective view of a washing machine as a home appliance according to an embodiment of the disclosure.

Referring to FIG. 1A, a washing machine 1 may include a main body 10, a water tank (not illustrated) installed in the main body 10, and a drum 11 installed in the water tank. A lifter 12 for lifting laundry upward while the drum 11 rotates and then dropping the laundry by gravity may be installed inside the drum 11. The drum 11 may perform washing, rinsing, and/or dehydration while rotating in a tub described below. The drum 11 may include a through hole connecting the internal space of the drum 11 to the internal space of the tub. The drum 11 may have a substantially cylindrical shape with one side open.

The main body 10 may generally have a hexahedral shape but is not limited thereto. An opening 13 may be formed at the front center of the main body 10 to load/unload laundry into/from the drum 11, and a door 14 may be rotatably installed to open/close the opening 13. At least a portion of the door 14 may be transparent or semitransparent such that the interior covering the drum 11 is visible.

Although not illustrated in FIG. 1A, the washing machine 1 may include a tub arranged in the water tank to store water. The tub may be supported in the water tank. The tub may have a substantially cylindrical shape with one side open. The tub may be elastically supported from the water tank by a damper. The damper may connect the water tank to the tub. The damper may be arranged to absorb vibration energy between the tub and the water tank to attenuate vibration, when vibration generated during the rotation of the drum 11 is transmitted to the tub and/or the water tank.

A control panel 15 may be installed on the front upper side of the main body 10 to display the operation state of the washing machine 1 to the user or to allow the user to directly control the washing operation. The control panel 15 may include an input unit as an input interface for receiving an operation command from the user and a display unit as an output interface for displaying the operation information of the washing machine 1.

The input unit may provide an electrical output signal corresponding to a user input to a controller (not illustrated) including a processor. The input unit may include, for example, a power button, an operation button, a course selection dial (or a course selection button), and a wash/rinse/dehydration setting button. The input button may include, for example, a tact switch, a push switch, a slide switch, a toggle switch, a micro switch, or a touch switch.

The display unit may receive a signal from the processor and display information corresponding to the received signal. The display unit may include a screen for displaying a wash course selected by rotating the course selection dial (or pressing the course selection button) and an operation time of the washing machine, and an indicator for displaying the wash setting/rinse setting/dehydration setting selected by the setting button. The display unit may include, for example, a liquid crystal display (LCD) panel, a light emitting diode (LED) panel, a speaker, and/or the like.

Although not illustrated in FIG. 1A, the washing machine 1 may include a driving device configured to rotate the drum 11.

The driving device (not illustrated) may include a driving motor and a rotation shaft (not illustrated) for transmitting a driving force generated by the driving motor to the drum 11. The rotation shaft may be connected to the drum 11 by passing through the tub. The driving device may be arranged to rotate the drum 11 forward or backward to perform a washing operation, a rinsing operation, and/or a dehydration operation.

A water supply device (not illustrated) may supply water to the tub. The water supply device may include a water supply pipe and a water supply valve arranged on the water supply pipe. The water supply pipe may be connected to an external water source. The water supply pipe may extend from the external water source to a detergent supply device and/or the tub. Water may be supplied to the tub through the detergent supply device. Water may be supplied to the tub without passing through the detergent supply device.

The water supply valve (not illustrated) may open or close the water supply pipe in response to an electrical signal from the processor. The water supply valve may allow or block the supply of water from the external water source to the tub. The water supply valve may include, for example, a solenoid valve that is opened/closed in response to an electrical signal.

The washing machine 1 may include a detergent supply device (not illustrated) configured to supply a detergent to the tub. The detergent supply device may be configured to supply a detergent into the tub during the water supply process. The water supplied through the water supply pipe may be mixed with the detergent via the detergent supply device. The water mixed with the detergent may be supplied into the tub. The detergent may include not only a laundry detergent but also a dryer rinse, a deodorizer, a sterilizer, or an air freshener.

The washing machine 1 may include a drainage device (not illustrated). The drainage device may be configured to discharge the water accommodated in the tub to the outside. The drainage device may include a drainage pipe extending from the bottom of the tub to the outside of a housing and a pump arranged on the drainage pipe. The pump may pump the water of the drainage pipe to the outside of the water tank.

A drainage port (not illustrated) may be formed at the bottom of the tub to drain the water stored in the tub to the outside of the tub. The drainage port may be connected to the drainage pipe. A drainage valve may be arranged on the drainage pipe to open/close the drainage pipe.

The controller including the processor may control various components of the washing machine (e.g., the driving motor and the water supply valve). The controller may control various components of the washing machine to perform at least one process including water supply, washing, rinsing, and/or dehydration according to a user input that is input to the control panel. For example, the controller may control the driving motor to adjust the rotation speed of the tub or may control the water supply valve of the water supply device to supply water to the tub.

The controller may include hardware such as a central processing unit (CPU) or a memory and software such as a control program. For example, the controller may include an algorithm for controlling the operation of the components in the washing machine, at least one memory storing program-type data, and at least one processor performing the above operation by using the data stored in the at least one memory. Each of the memory and the processor may be implemented as a separate chip. The processor may include one or more processor chips or one or more processing cores. The memory may include one or more memory chips or one or more memory blocks. Also, the memory and the processor may be implemented as a single chip.

The front-loading washing machine 1 illustrated in FIG. 1A may wash the laundry by repeatedly raising and dropping the laundry by rotating the drum 11.

The front-loading washing machine 1 illustrated in FIG. 1A may wash the laundry by repeatedly raising and dropping the laundry by rotating the drum 11.

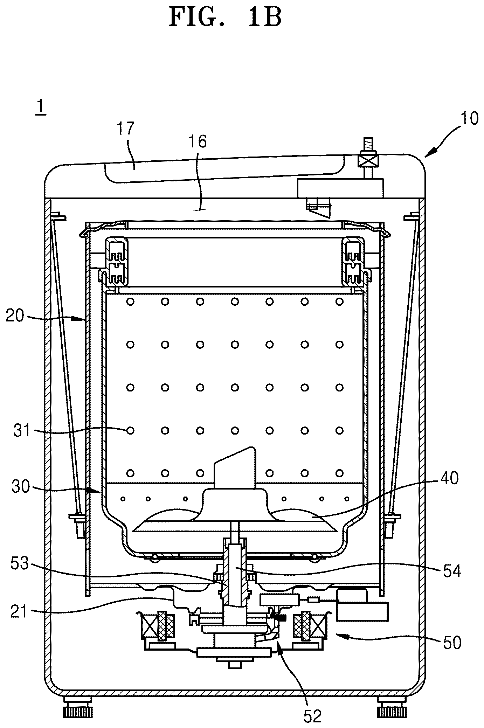

FIG. 1B is a cross-sectional view of a washing machine as a home appliance according to an embodiment of the disclosure.

Referring to FIG. 1B, a washing machine 1 may be a top-loading washing machine having a structure in which laundry is loaded/unloaded through the top side thereof, unlike a front-loading washing machine in which an laundry inlet is arranged to face forward as illustrated in FIG. 1A.

As illustrated in FIG. 1B, the washing machine 1 according to an embodiment of the disclosure may include a main body 10 forming the exterior of the washing machine, a water tank 20 installed in the main body 10 to accommodate washing water, a dehydration tank 30 rotatably arranged in the water tank 20, a pulsator 40 rotatably arranged at a bottom portion of the dehydration tank 30, and a driving device 50 for driving the dehydration tank 30 or the pulsator 40.

The main body 10 may include a laundry inlet 16 formed at an upper portion of the main body 10 to load laundry, and a cover 17 pivotably installed on the main body 10 to open/close the laundry inlet 16.

The water tank 20 may have a cylindrical shape with an open top side and may be supported while being suspended from the main body 10 by several suspension devices coupled to the lower outer surface of the water tank 20. The suspension devices may attenuate the vibration generated in the main body 10 or the water tank 20 during washing or dehydration.

The dehydration tank 30 may have a cylindrical shape with an open top side and may include a plurality of dehydration holes 31 at the periphery thereof such that the internal space thereof may communicate with the internal space of the water tank 20.

The pulsator 40 may rotate forward or backward to generate a water flow, and the water flow may agitate the laundry in the dehydration tank 30 together with the washing water. The washing machine 1 illustrated in FIG. 1B may wash the laundry by using the water flow.

The driving device 50 may include a driving motor 51 that receives power to generate a driving force, and a power switching device 52 that transmits the driving force generated from the driving motor 51 to the pulsator 40 alone or to the pulsator 40 and the dehydration tank 30 simultaneously. A dehydration shaft 53 may refer to a hollow shaft coupled to the dehydration tank 30, and a washing shaft 54 may be installed at a hollow portion so as to be connected to the pulsator 40 by passing through the water tank 20 and the dehydration shaft 53.

As illustrated in FIG. 1A or FIG. 1B, in the washing machine 1, a motor or a driving motor 51 may be required to rotate the drum 11 or the pulsator 40. Hereinafter, the motor or the driving motor 51 for rotating the drum 11 or the pulsator 40 will be collectively referred to as a motor.

In order to drive the motor, a home appliance such as the washing machine 1 may rectify input AC power and establish a direct current (DC) voltage by using a DC link capacitor. This established DC voltage may be converted back into an AC voltage by an inverter. Recently, a home appliance such as the washing machine 1 uses an IPM into which a three-phase inverter and a gate driver are integrated. The IPM may include an internal temperature sensor, and when the internal temperature of the IPM increases, the temperature sensor may operate to stop operation of the IPM to protect the IPM from overheating. Because the internal temperature sensor of the IPM senses a high temperature only when the junction temperature inside the IPM increases due to heating, the internal temperature sensor may not protect the home appliance including the IPM from overheating when abnormal overheating occurs outside the IPM. In particular, when overheating occurs at a great distance from the IPM, because the input AC power and the IPM operation may not be interrupted until the overheating leads to fire or component damage, there may be a limitation in effectively protecting the home appliance from overheating.

Thus, for effective prevention of overheating, the temperature sensor should be arranged at a location on the bottom surface of the IPM, which is most prone to overheating when the IPM operates. Also, an overheating detection circuit with a high degree of freedom in position should be added to prevent overheating of the home appliance in advance and also perform an overheating protection function, for example, AC power interruption and/or IPM driving interruption, to allow the consumer to more safely use the home appliance.

**[Table 1]**

| Description | Condition | Symbol | Value | | | Unit |
|---|---|---|---|---|---|---|
| | | | min | typ | max | |
| Resistor | T_{NTC} = 25 °C | RNTC | - | 85 | - | kΩ |
| B-constant of NTC | | B(25/100) | - | 4092 | - | K |

Table 1 illustrates the specifications of a thermistor as a temperature sensor in an IPM according to an embodiment of the disclosure. According to Table 1, the thermistor has a resistance value of 85 kΩ at 25 °C. Based on the change in the resistance value of the thermistor depending on the sensed temperature, the IPM may autonomously perform an overheating prevention operation.

Hereinafter, throughout the disclosure, the IPM may be referred to as a power module or an intelligent power module device. Also, an IPM device may be a physical device in which the IPM is packaged and may likewise be referred to as a power module device or an intelligent power module device.

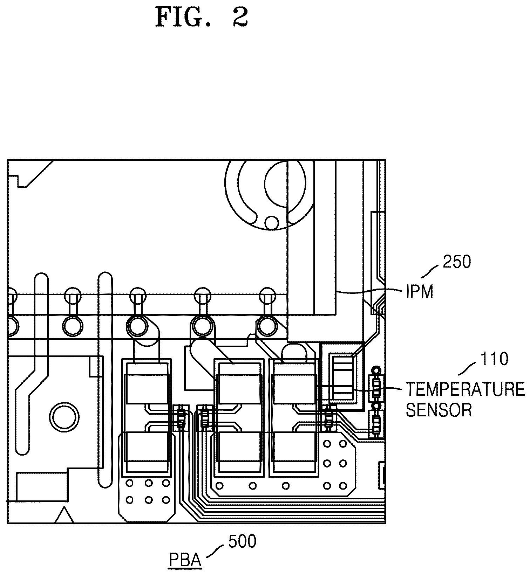

FIG. 2 is a diagram illustrating the position of a temperature sensor in a PBA of a home appliance according to an embodiment of the disclosure.

FIG. 2 is a diagram illustrating the position of a temperature sensor 110 in a PBA 500 of a home appliance according to an embodiment of the disclosure. Referring to FIG. 2, the position of an IPM 250 in the PBA 500 may also be seen.

In an embodiment, the PBA 500 may be variously installed in the home appliance. For example, the PBA 500 may be installed horizontally on the bottom surface of the home appliance, or when the home appliance is tall, the PBA 500 may be vertically installed at a position vertically spaced apart from the bottom surface. Due to the various installation positions of the PBA 500, the temperature sensor 110 may not be located in the direction of flame or at the position where overheating is most intense when the IPM 250 overheats. Thus, regardless of the position or direction in which the PBA 500 is mounted in the home appliance, the temperature sensor 110 may need to be located to optimally sense overheating of the IPM 250.

The temperature sensor 110 may be a device that senses the temperature of a contact surface. The temperature sensor 110 may be a device that may change the temperature of a contact surface into various parameters. For example, the temperature sensor 110 may change the sensed temperature into resistance, voltage, or the like. Various temperature sensing devices may be used as the temperature sensor 110. In an embodiment, the temperature sensor 110 may include a positive temperature coefficient (PTC) thermistor or a negative temperature coefficient (NTC) thermistor whose resistance varies depending on the sensed temperature.

According to an embodiment of the disclosure, the temperature sensor 110 may be installed at a position on the bottom surface of the IPM 250 that is most likely to overheat and/or is most strongly heated when the IPM 250 overheats for some reason during operation, and thus, overheating of the IPM 250 may be sensed as quickly as possible. When the IPM 250 exceeds a certain threshold temperature that is determined as overheating, an overheating prevention circuit may operate based on a temperature sensed by the temperature sensor 110, a resistance corresponding to the temperature, and a voltage across the resistance. When the overheating prevention circuit operates, the power applied to the PBA 500 and the IPM 250 and the input AC power applied to the home appliance may be interrupted and thus the spread of fire and the damage to components due to overheating may be prevented.

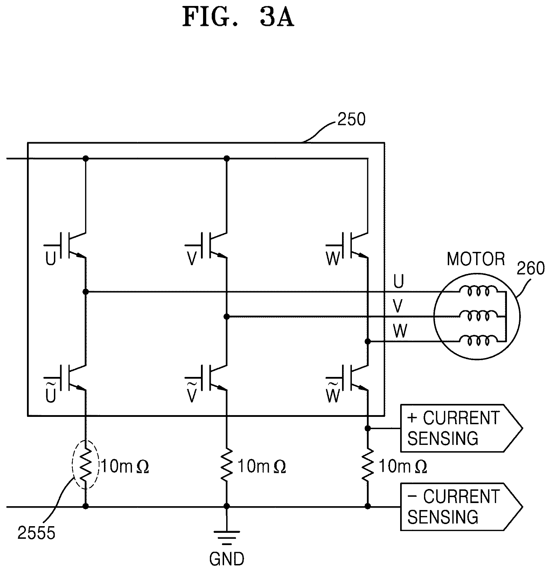

FIG. 3A is a circuit diagram illustrating the position of a temperature sensor in an IPM according to an embodiment of the disclosure.

Referring to FIG. 3A, the IPM 250 may include a three-phase inverter. The inverter may include a power converter whose output is AC power, among the power converters used to convert a particular power source (voltage source, current source, frequency, magnitude, and direction) into power of other components.

The motor may be a device that generates rotation by using AC power or DC power. The motor may generate rotation by changing in frequency and torque according to the output of the inverter.

In FIG. 3A, a motor 260 driven by the IPM 250 is illustrated as a type of load; however, the load is not limited to the motor 260 and may be any load that uses AC power. Although FIG. 3A illustrates a three-phase inverter and a three-phase motor 260, this is merely an example and the IPM 250 may include a single-phase inverter circuit and the motor 260 may also be a single-phase motor.

In FIG. 3A, a temperature sensor 110 may be installed in an high-current line N terminal vicinity 2555 of the IPM 250 in the inverter circuit included in the IPM 250; however, because the high-current line N terminal vicinity 2555 of the IPM 250 is outside the IPM device and is a location somewhat spaced apart from the bottom surface of the IPM device at which heating is highest, there may be a limitation in protecting the IPM device or the home appliance including the IPM device from overheating.

In an embodiment, the portion most likely to overheat may be near the lower U phase of the IPM device. This is because, when the inverter circuit of the IPM 250 operates to switch, the lower U phase uses a smaller plate than the plate on which the upper U-phase circuit is arranged and the plate corresponding to the lower U phase is closer to the center of the bottom surface of the IPM device in which the IPM 250 is packaged, than the plate corresponding to the other lower V phase or lower W phase. However, in an embodiment of the disclosure, the U, V, and W phases are relative names, and in the disclosure, the phase located on the most central plate in the IPM device will be conveniently defined as the lower U phase. The plate on which the U, V, and W phases are arranged may include a conductor on which a circuit is arranged in the IPM device. In other words, the lower U-phase plate may include a switch corresponding to the lower U phase and a conductor corresponding to a circuit in which the switch is connected to another component to operate as the inverter of the IPM 250.

Thus, the temperature sensor 110 may be installed closest to the lower U-phase, or within a certain distance (e.g., 7 mm) from the lower U-phase.

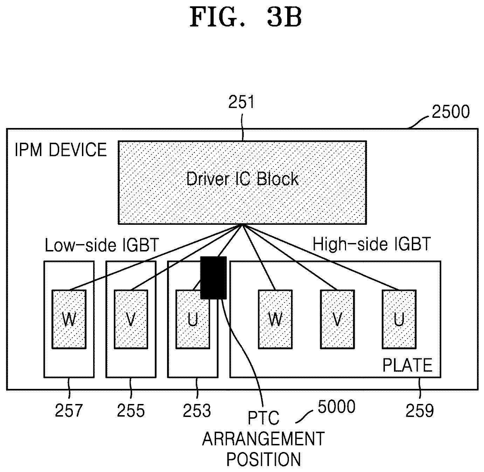

FIG. 3B is a block diagram illustrating the position of a temperature sensor in an IPM device according to an embodiment of the disclosure.

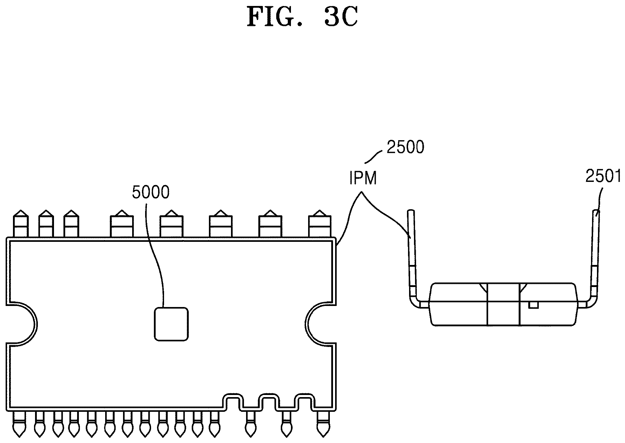

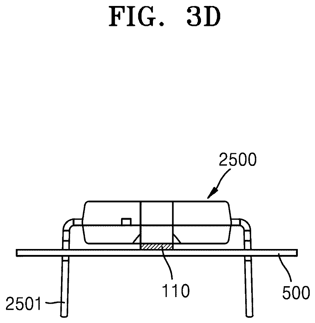

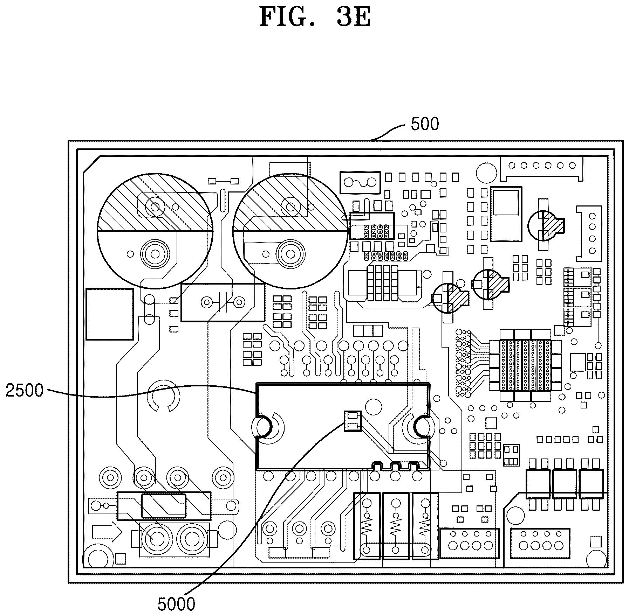

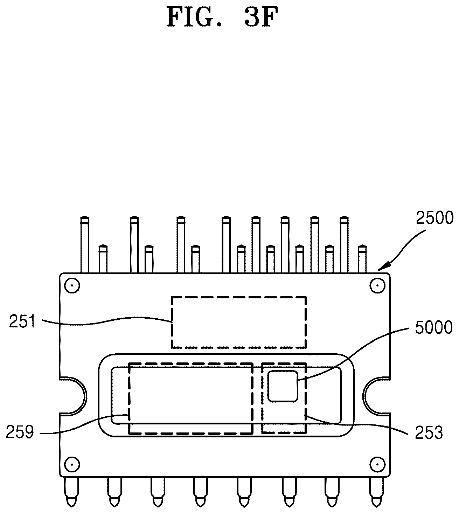

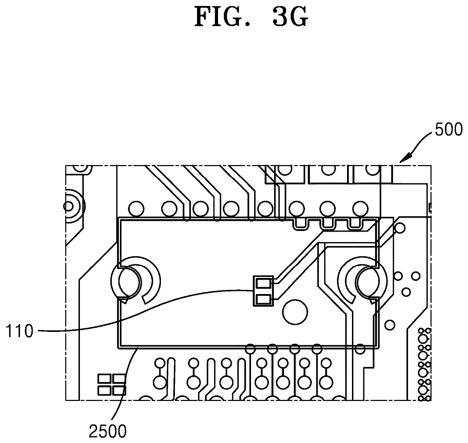

FIG. 3B is a block diagram illustrating the position of a temperature sensor in an IPM device 2500 in which an IPM 250 is packaged, according to an embodiment of the disclosure. In FIG. 3B, when the internal circuit of the IPM 250 illustrated in FIG. 3A is represented as a block, an insulated gate bipolar transistor (IGBT) responsible for switching the lower W, V, and U phases may be arranged from the left side and an IGBT responsible for switching the upper W, V, and U phases may be arranged on the right side. In FIG. 3, an IGBT is illustrated as a switch included in the IPM 250; however, the switch is not limited thereto. In an embodiment, the switch included in the IPM 250 may be a metal oxide silicon field effect transistor (MOSFET), a field effect transistor (FET), a transistor, or the like.

As described above with reference to FIG. 3A, because the lower U-phase vicinity of the inverter circuit included in the IPM 250 is the portion most vulnerable to overheating, as a location at which the temperature sensor 110 is arranged in the IPM device 2500, a location 5000 of FIG. 3B may be referred to as a desirable position for overheating sensing.

The characteristics of the location 5000 at which the temperature sensor 110 is located may be as follows.

As illustrated in FIG. 3B, a first plate 253 on which the lower U phase is located is located closer to a center portion of the IPM 250 than a second plate 255 corresponding to the lower V phase and a third plate 257 corresponding to the lower W phase.

Also, the first plate 253 may be located at the boundary of a fourth plate 259 with a different size. Also, the location 5000 may be located slightly closer to the IGBT block on a reference line between a driver integrated circuit (IC) block 251 of the IPM 250 and the IGBT block corresponding to the lower U phase (or the plate corresponding to the lower U phase). Also, the location 5000 may be located on the boundary of the IGBT block corresponding to the lower U phase (or the plate corresponding to the lower U phase). The driver IC block 251 may be an IC block that includes a gate driver that outputs a gate signal for driving a switch of the IPM 250, for example, an IGBT.

The location 5000 may be located slightly closer to the IGBT block because a lot of heat due to switching loss is generated in the IGBT block. Also, as illustrated in FIG. 3B, the first plate 253 corresponding to the lower U phase may be smaller than the fourth plate 259 corresponding to the upper U, V, and W phases and therefore may be slightly more vulnerable to overheating than the fourth plate 259. This may be because the fourth plate 259 corresponding to the upper U, V, and W phases is integrally formed, whereas the first plate 253, the second plate 255, and the third plate 257 corresponding to the lower U, V, and W phases are separately formed. Thus, the location 5000 at which the temperature sensor 110 is installed may be designated such that there is a large portion of vertical overlap with the lower U phase. Also, because heating increases toward the center of the IPM device 2500 rather than the edge of the IPM device 2500, the location at which the temperature sensor 110 is installed may be closer to the center of the IPM device 2500. Thus, the location at which the temperature sensor 110 should be installed may be a location that is located to overlap the vertical plane of the first plate 253 corresponding to the IGBT switch device corresponding to the lower U phase.

FIG. 3C is a diagram illustrating the position of a temperature sensor in an IPM device according to an embodiment of the disclosure.

FIG. 3C illustrates the external shape of an IPM device 2500 according to an embodiment of the disclosure. As illustrated in FIG. 3C, the IPM device 2500 may include an IC component, and a lead 2501 may be soldered to a PBA. However, because the external shape of the IPM device 2500 illustrated in FIG. 3C may vary slightly depending on the manufacturer, the IPM device 2500 according to the disclosure is not limited to the external shape illustrated in FIG. 3C and the IPM device 2500 illustrated in FIG. 3C is merely an example. Throughout the disclosure, the IPM device may be referred to as a power module device or an intelligent power module device.

The position of the temperature sensor 110 that satisfies the condition described above with reference to FIG. 3B is likewise represented as a location 5000 in FIG. 3C. In FIG. 3C, the location 5000 may correspond to the position at which the first plate 253 corresponding to the lower U phase of the inverter included in the IPM 250 is located. Although the structure in the IPM device 2500 may vary slightly depending on the manufacturer, the position at which the temperature sensor 110 is located may follow the standard described above with reference to FIG. 3B. Thus, the temperature sensor 110 may be located at a location at which the first plate 253 corresponding to the lower U phase is located and which forms a boundary with the fourth plate 259 corresponding to the upper U, V, and W phases, and at a position slightly closer to the IGBT block on a reference line between the driver IC block 251 of the IPM 250 and the IGBT block corresponding to the lower U phase.

FIG. 3D is a side view illustrating the arrangement structure of a temperature sensor according to an embodiment of the disclosure.

Referring to FIG. 3D, the IPM device 2500 may be soldered to a printed circuit board (PCB) of the PBA 500 with the lead 2501 of the IPM device 2500 passing therethrough. In this case, the temperature sensor 110 may be arranged in a fine gap between the bottom surface of the IPM device 2500 and the substrate (PCB substrate) surface of the PBA 500. The temperature sensor 110 may be arranged to contact the bottom surface of the IPM device 2500 as closely as possible to effectively sense overheating that may occur in the IPM device 2500.

As illustrated in FIG. 3D, when the temperature sensor 110 is soldered to closely contact the bottom surface of the IPM device 2500, the temperature sensor 110 may be soldered around the IPM device 2500 rather than on the bottom surface of the IPM device 2500, thereby preventing the case where overheating of the IPM device 2500 is not accurately sensed.

FIG. 3E is a PBA pattern diagram illustrating the arrangement of a temperature sensor according to an embodiment of the disclosure.

FIG. 3E illustrates a PCB pattern diagram of the PBA 500. In the PCB pattern diagram of the PBA 500 illustrated in FIG. 3E, the IPM device 2500 is also illustrated, and the temperature sensor 110 is located at a location 5000 near the center of the IPM device 2500. As illustrated in FIG. 3D, the temperature sensor 110 may be soldered to the PCB surface of the PBA 500 while closely contacting the bottom surface of the IPM device 2500.

FIG. 3F is a diagram illustrating the position of a temperature sensor in an IPM device according to an embodiment of the disclosure.

An IPM device 2500 illustrated in FIG. 3F is manufactured by a different manufacturer than the IPM device 2500 illustrated in FIG. 3C. Although the manufacturers are different, the principle of arranging the temperature sensor 110 in the IPM device 2500 illustrated in FIG. 3F may be the same as the principle described with reference to FIG. 3B. Thus, also in the case of the IPM device 2500 illustrated in FIG. 3F, the temperature sensor 110 may be located at the position where the first plate 253 corresponding to the lower U phase of the inverter included in the IPM 250 is located. Thus, the temperature sensor 110 may be located at a location at which the first plate 253 corresponding to the lower U phase is located and which forms a boundary with the fourth plate 259 corresponding to the upper U, V, and W phases, and at a position slightly closer to the IGBT block on a reference line between the driver IC block 251 included in the IPM 2500 and the IGBT block corresponding to the lower U phase.

Thus, according to this principle, in the IPM device 2500 illustrated in FIG. 3F, the temperature sensor 110 may be located at a location 5000 as illustrated in FIG. 3F.

FIG. 3G is a PBA pattern diagram illustrating the arrangement of a temperature sensor according to an embodiment of the disclosure.

FIG. 3G is a PCB pattern diagram illustrating the position of the temperature sensor 110 when the IPM device 2500 illustrated in FIG. 3F is mounted on the PBA 500. In the PCB pattern diagram of the PBA 500 illustrated in FIG. 3G, the IPM device 2500 is also illustrated, and the temperature sensor 110 is located at a location near the center of the IPM device 2500. Like in FIG. 3D, the temperature sensor 110 may be soldered to the surface of the PBA 500 while closely contacting the bottom surface of the IPM device 2500.

The arrangement of the temperature sensor 110 described above may allow optimal prevention of overheating of the IPM device 2500 during motor operation even without using a separate thermal surveillance camera.

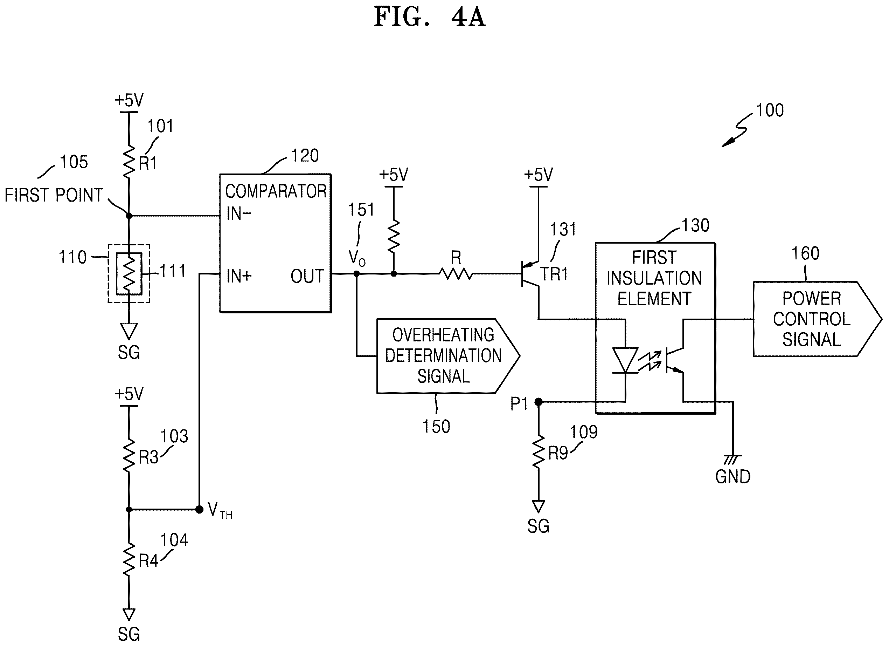

FIG. 4A illustrates an overheating prevention circuit according to an embodiment of the disclosure.

An overheating prevention circuit 100 and an overheating prevention method according to an embodiment of the disclosure may prevent fire, malfunction, and damage caused by overheating occurring at a particular position of the IPM device 2500 and allow the user to more safely use the home appliance. Also, the overheating prevention circuit 100 and the overheating prevention method according to an embodiment of the disclosure may expand the overheating protection area by increasing the degree of freedom in the position of the temperature sensor 110 to detect overheating of the IPM device 2500 included in the home appliance. Also, by simultaneously interrupting the input AC power input to the home appliance and stopping the motor driving, a safer overheating prevention method may be provided.

Referring to FIG. 4A, the overheating prevention circuit 100 according to the disclosure may include a distribution resistor R1 101, a temperature sensor 110, a comparator 120, and a first insulation device 130.

In an embodiment, the distribution resistor 101 and the temperature sensor 110 may distribute a certain input voltage, for example, +5 V in FIG. 4A, according to the magnitude of each resistance, and a first point 105 becoming a connection point when the distribution resistor 101 and the temperature sensor 110 are connected in series may be input to a first input IN- of the comparator 120.

For convenience, the distribution resistor 101 is illustrated as a single resistor in FIG. 4A; however, the distribution resistor 101 may include a plurality of resistors. In an embodiment, the temperature sensor 110 may be a thermistor whose resistance varies with temperature. Also, although only the temperature sensor 110 is illustrated between the first point 105 and a signal-level ground SG, the temperature sensor 110 and a plurality of resistors may be connected in series. In an embodiment, as illustrated in FIG. 4A, the temperature sensor 110 that is connected in series to the distribution resistor 101 connected to a certain voltage and is connected to the signal-level ground SG may be a PTC thermistor whose resistance increases with temperature.

In an embodiment, a certain voltage and a connection point at which at least two distribution resistors R3 103 and R4 104 are connected in series may be input to a second input IN+ of the comparator 120. The second input IN+ of the comparator 120 may be a certain threshold voltage V_{TH} that is a voltage applied across the R4 104 when a certain voltage is distributed by the R3 103 and the R4 104. A voltage corresponding to the first point 105 input to the first input IN- of the comparator 120 may be compared with V_{TH}. When a temperature determined as overheating is sensed by the temperature sensor 110, the voltage applied to the first point 105 may become higher than V_{TH}, and an output V_{O} 151 of the comparator 120 may become 0 V corresponding to "low" (or a certain voltage that may be logic '0'). However, this is merely an example, and depending on the circuit configuration, the output V_{O} 151 of the comparator 120 may be a signal corresponding to "high" when a temperature determined as overheating is sensed.

In an embodiment, when the output V_{O} 151 of the comparator 120 becomes low, the temperature sensed by the temperature sensor 110 may be considered as being higher than or equal to the temperature corresponding to overheating and the low signal may be an event signal for performing an overheating prevention operation. The event signal for performing an overheating prevention operation may be used as an overheating determination signal 150 as a signal for stopping the IPM 250 and motor driving, and also, the event signal for performing an overheating prevention operation may be used as a power control signal 160 as a signal for interrupting the main AC power input to the home appliance.

When the output V_{O} 151 of the comparator 120 becomes low, a TR1 131 may be turned on and a power control signal 160 may be triggered through the first insulation element 130. The first insulation element 130 may be used to insulate the signal-level ground SG from a power-level ground GND. The power control signal 160 may be used to interrupt the input AC power of the home appliance.

Hereinafter, an overheating detection process for causing the V_{O} 151 to become low will be described.

In FIG. 4A, the temperature sensor 110 may include a PTC thermistor 111. The resistance of the PTC thermistor 111 may increase when the temperature of the installed point of the PTC thermistor 111 increases. Thus, the voltage of the first point 105 may increase when the temperature of the point at which the PTC thermistor 111 is installed increases. For example, it is assumed that the temperature determined as "overheating" at the position sensed by the PTC thermistor 111 is 125 °C and the resistance of the PTC thermistor 111 is 100 Ω in this case. When the distribution resistor 101 is also 100 Ω, the voltage of the first point 105 may become 2.5 V, and in this case, the temperature detected by the temperature sensor 110 should be determined as "overheating". The second input IN+ of the comparator 120 should be 2.5 V to output an event signal determined as overheating. Thus, when the R3 103 is 100 Ω and the R4 104 is 100 Ω, the V_{TH} may become 2.5 V. The V_{TH} may be referred to as a certain threshold voltage at which the temperature detected by the temperature sensor 110 is determined as "overheating".

On the contrary, when the temperature of the location at which the PTC thermistor 111 included in the temperature sensor 110 is located is lower than 125 °C, because the voltage of the first point 105 becomes lower than 2.5 V, the output V_{O} 151 of the comparator 120 will not be an event trigger, for example, "low", determined as overheating.

In an embodiment, when the temperature sensed by the temperature sensor 110 reaches a temperature corresponding to overheating and thus the overheating determination signal 150, which is an event signal for performing an overheating prevention operation, is output as "low" and then the temperature sensed by the temperature sensor 110 again becomes a temperature corresponding to non-overheating, the voltage of the first point 105 may become lower than V_{TH}. When the voltage of the first point 105 becomes lower than V_{TH}, the output V_{O} 151 of the comparator 120 may again change from "low" to "high" and the overheating determination signal 150 may be inverted from "low" to "high". When the overheating determination signal 150 is inverted from "low" to "high", the overheating determination signal 150, which has been used as a signal for stopping the motor driving, may be again used as a signal for resuming the motor driving. In other words, the inverted overheating determination signal 150 may be used as a signal for resuming the operation of a processor 1001 and the IPM 250.

Also, in an embodiment, when the output V_{O} 151 of the comparator 120 again changes from "low" to "high", the power control signal 160 may also be inverted. When the power control signal 160 is inverted from "low" to "high", the power control signal 160, which has been used as a signal for interrupting the main AC power, may be inverted and used as a signal for reconnecting the home appliance to the main AC power. In other words, the inverted power control signal 160 may be used as a signal for connecting the home appliance to the main AC power.

For example, it is assumed that the temperature determined as "overheating" at the position sensed by the PTC thermistor 111 is 125 °C and the resistance of the PTC thermistor 111 is 100 Ω and then the temperature sensed by the PTC thermistor 111 drops below 125 °C and thus the resistance of the PTC thermistor 111 drops below 100 Ω again. Because the distribution resistor 101 is 100 Ω, when the voltage of the first point 105 becomes lower than 2.5 V, it may become lower than a certain threshold voltage, for example, 2.5 V as V_{TH}, determined as "overheating". In this case, the output V_{O} 151 of the comparator 120 may be inverted from "low" to "high", which may mean that the overheating determination signal 150 is inverted from "low" to "high". As will be described below, when the overheating determination signal 150 becomes high, the inverted overheating determination signal 150 may be used as a signal for resuming the operation of a voltage regulator that generates 12 V for the operation of the IPM 250 and 5 V for operating the PBA including the processor 1001.

Likewise, when the power control signal 160 changes from "low" to "high", the inverted power control signal 160 may be used as a signal for again turning on a power interrupter 220 to resume the connection of the main AC power to the home appliance.

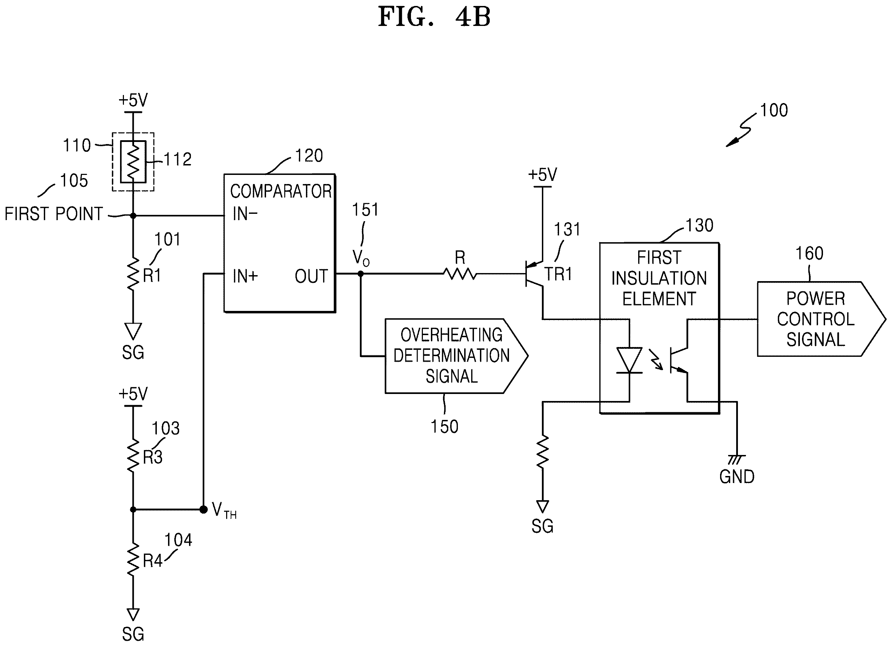

FIG. 4B illustrates an overheating prevention circuit according to an embodiment of the disclosure.

Unlike the overheating prevention circuit 100 illustrated in FIG. 4A, an overheating prevention circuit 100 illustrated in FIG. 4B may include a temperature sensor 110 that includes an NTC thermistor 112. Because the resistance of the NTC thermistor 112 decreases as the temperature of the location at which the temperature sensor 110 is located increases, a distribution resistor 101 may be arranged between a first point 105 and a signal ground, and the NTC thermistor 112 included in the temperature sensor 110 may be arranged between a certain voltage (+5 V) and the first point 105, as illustrated in FIG. 4B.

In FIG. 4B, only the positions of the distribution resistor 101 and the NTC thermistor 112 included in the temperature sensor 110 are interchanged with each other, and the other configurations may be the same as those in FIG. 4A and thus redundant descriptions thereof will be omitted for conciseness.

An overheating detection process for causing the V_{O} 151 to become low corresponding to an overheating detection event in the overheating prevention circuit 100 of FIG. 4B will be described below.

In FIG. 4B, the resistance of the NTC thermistor 112 included in the temperature sensor 110 may decrease as the temperature of the installed point of the NTC thermistor 112 increases. Thus, when the temperature of the installed point of the NTC thermistor 112 increases, because the voltage across the NTC thermistor 11 decreases, the voltage of the first point 105 may increase relatively. For example, it is assumed that the temperature determined as "overheating" at the position sensed by the NTC thermistor 112 is 100 °C and the resistance of the NTC thermistor 112 is 3 Ω in this case. If the distribution resistor 101 is 6 Ω, when the voltage of the first point 105 becomes 3.3 V, 3.3 V may become a certain threshold voltage determined as "overheating". Thus, 3.3 V should be input to the second input IN+ of the comparator 120. Thus, when the R3 103 is 3 Ω and the R4 104 is 6 Ω, the V_{TH} may become 3.3 V. The V_{TH} may be referred to as a certain threshold voltage at which the temperature detected by the temperature sensor 110 is determined as "overheating". Thus, when the temperature determined as "overheating" at the position sensed by the NTC thermistor 112 becomes higher than or equal to 100 °C, the comparator 120 may output a signal in which the overheating determination signal 150 becomes low as an overheating prevention event signal.

On the contrary, when the temperature of the location at which the NTC thermistor 112 included in the temperature sensor 110 is located is lower than 100 °C, because the voltage of the first point 105 becomes lower than 3.3 V, the output V_{O} 151 of the comparator 120 will not be a trigger, for example, as an overheating prevention event signal with a signal level "low".

In an embodiment, when the temperature of the location at which the NTC thermistor 112 is located is higher than or equal to 100 °C and thus the comparator 120 outputs a signal in which the overheating determination signal 150 becomes low as an overheating prevention event signal and then the temperature of the location at which the NTC thermistor 112 is located becomes lower than 100 °C and thus the voltage of the first point 105 becomes lower than +3.3 V, the output V_{O} 151 of the comparator 120 may change from "low" to "high".

When the overheating determination signal 150 is inverted from "low" to "high", the overheating determination signal 150, which has been used as a signal for stopping the motor driving, may be again used as a signal for resuming the motor driving. In other words, the inverted overheating determination signal 150 may be used as a signal for resuming the operation of the processor 1001 and the IPM 250.

Also, in an embodiment, when the output V_{O} 151 of the comparator 120 again changes from "low" to "high", the power control signal 160 may also be inverted. When the power control signal 160 is inverted from "low" to "high", the power control signal 160, which has been used as a signal for interrupting the main AC power, may be inverted and used as a signal for reconnecting the home appliance to the main AC power. In other words, the inverted power control signal 160 may be used as a signal for resuming the power supply to the home appliance.

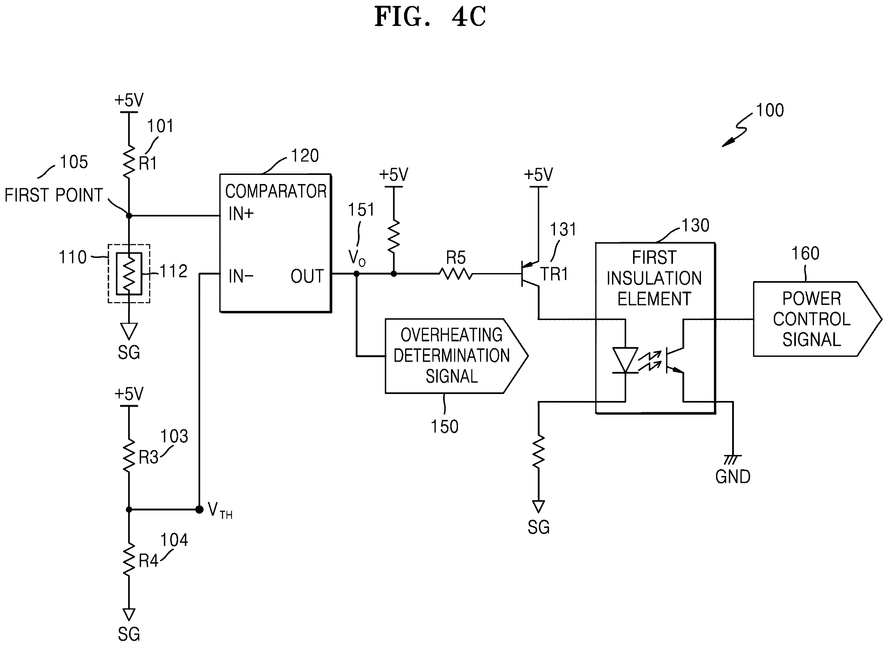

FIG. 4C illustrates an overheating prevention circuit according to an embodiment of the disclosure.

Referring to FIG. 4C, an overheating prevention circuit 100 according to the disclosure may include a distribution resistor 101, a temperature sensor 110, a comparator 120, and a first insulation element 130.

In an embodiment, the distribution resistor 101 and the temperature sensor 110 may distribute a certain input voltage, for example, +5 V in FIG. 4C, according to the magnitude of a resistance, and a first point 105 becoming a connection point when the distribution resistor 101 and the temperature sensor 110 are connected in series may be input to a second input IN+ of the comparator 120.

For convenience, the distribution resistor 101 is illustrated as a single resistor in FIG. 4C; however, the distribution resistor 101 may include a plurality of resistors. The temperature sensor 110 may be a thermistor whose resistance varies with temperature. In an embodiment, as illustrated in FIG. 4C, the temperature sensor 110 that is connected in series to the distribution resistor 101 to distribute a certain voltage and is connected to the signal-level ground SG may include an NTC thermistor 112 whose resistance increases with temperature.

A certain voltage and a voltage V_{TH} of a connection point at which at least two distribution resistors R3 103 and R4 104 are connected in series may be input to a first input IN- of the comparator 120. The first input IN- of the comparator 120 may be a certain threshold voltage V_{TH} that is a voltage applied across the R4 104 and the signal-level ground SG when a certain voltage is distributed by the R3 103 and the R4 104. The voltage of the first point 105 input to the second input IN+ of the comparator 120 may be compared with the voltage V_{TH} input to the first input IN- by the comparator 120. When the temperature detected by the temperature sensor 110 continues to increase, the resistance of the NTC thermistor 112 may decrease and the voltage applied to the first point 105 may decrease. When the temperature detected by the temperature sensor 110 becomes higher than or equal to the temperature determined as "overheating", the voltage applied to the first point 105 may become lower than V_{TH} and the output V_{O} 151 of the comparator 120 may become 0 V corresponding to "low" (or a certain voltage that may be logic '0'). When the output V_{O} 151 of the comparator 120 becomes low, the output V_{O} 151 of the comparator 120 may become an event signal for performing an overheating prevention operation. The event signal for performing an overheating prevention operation may be used as an overheating determination signal 150 as a signal for stopping the motor driving.

When the output V_{O} 151 of the comparator 120 becomes low, the TR1 131 may be turned on and the power control signal 160 may be triggered (low) through the first insulation element 130. The first insulation element 130 may be used to insulate the signal-level ground SG from a power-level ground GND. The power control signal 160 may be a signal for performing another type of overheating prevention operation used to interrupt the main AC power of the home appliance.

Hereinafter, an overheating detection process for causing the V_{O} 151 of the comparator 120 to become low will be described.

In FIG. 4C, the temperature sensor 112 may include an NTC thermistor 112. The resistance of the NTC thermistor 112 may decrease when the temperature of the installed point of the NTC thermistor 112 increases. Thus, the voltage of the first point 105 may decrease when the temperature detected by the NTC thermistor 112 increases. For example, it is assumed that the temperature determined as "overheating" at the position sensed by the NTC thermistor 112 is higher than or equal to 100 °C. When the temperature at the position sensed by the NTC thermistor 112 is lower than 100 °C, the resistance of the NTC thermistor 112 may be higher than 3 Ω. When the distribution resistor 101 is also 3 Ω, the voltage of the first point 105 may be higher than 2.5 V. In order to detect overheating, 2.5 V should be input to the first input IN- of the comparator 120. In the circuit configuration illustrated in FIG. 4C, when the resistances of the R3 103 and the R4 104 are equal to each other, V_{TH} may become 2.5 V. The V_{TH} may be referred to as a certain threshold voltage at which the temperature detected by the temperature sensor 110 is determined as "overheating". When the temperature at the position sensed by the NTC thermistor 112 becomes 100 °C, the resistance of the NTC thermistor 112 may become 3 Ω and the second input IN+ of the comparator 120 may become a certain threshold voltage of 2.5 V. When the temperature at the position sensed by the NTC thermistor 112 becomes higher than or equal to 100 °C, the resistance of the NTC thermistor 112 may become lower than 3 Ω, the second input IN+ of the comparator 120 may become lower than a certain threshold voltage of 2.5 V, and the V_{O} 151 may become low, thus starting an "overheating" prevention operation.

In an embodiment, when a temperature corresponding to overheating is sensed by the temperature sensor 110 and then a temperature lower than the temperature corresponding to overheating is sensed, the resistance of the NTC thermistor 112 may increase and the voltage applied to the first point 105 may also increase. When the voltage applied to the first point 105 becomes higher than V_{TH}, the output V_{O} 151 of the comparator 120 may be inverted from "low" to "high". When the output V_{O} 151 of the comparator 120 becomes high, it may be an event signal for releasing the overheating prevention operation. As the overheating determination signal 150 is inverted, the event signal for releasing the overheating prevention operation may be used as a signal for resuming the motor driving.

When the output V_{O} 151 of the comparator 120 becomes high, the TR1 131 may be turned off and the power control signal 160 may be inverted through the first insulation element 130. The first insulation element 130 may be used to insulate the signal-level ground SG from the power-level ground GND. The inverted power control signal 160 may be a signal for resuming the main AC power supply of the home appliance.

Hereinafter, an overheating release process for causing the V_{O} 151 to change from "low" to "high" will be described.

In FIG. 4C, the temperature sensor 112 may include an NTC thermistor 112. The resistance of the NTC thermistor 112 may increase when the temperature of the installed point of the NTC thermistor 112 decreases. Thus, the voltage of the first point 105 may increase when the temperature of the point at which the NTC thermistor 112 is installed again decreases below the temperature determined as overheating. For example, it is assumed that the temperature determined as "overheating" at the position sensed by the NTC thermistor 112 is higher than or equal to 100 °C. When the temperature at the position sensed by the NTC thermistor 112 becomes lower than 100 °C, the resistance of the NTC thermistor 112 may become higher than 3 Ω. When the distribution resistor 101 is also 3 Ω, the voltage of the first point 105 may become higher than 2.5 V. Because 2.5 V is input to the first input IN- of the comparator 120, when the temperature at the position sensed by the NTC thermistor 112 becomes lower than 100 °C, the resistance of the NTC thermistor 112 may become higher than 3 Ω. When the resistance of the NTC thermistor 112 becomes higher than 3 Ω, the voltage input to the second input IN+ of the comparator 120 may become higher than a certain threshold voltage of 2.5 V and the V_{O} 151 may change from "low" to "high", thus starting an "overheating" release operation.

The start of the "overheating" release operation may mean that the overheating determination signal 150 is inverted from "low" to "high" and the power control signal 160 is also inverted. In an embodiment, the inverted overheating determination signal 150 may be used as a signal for resuming the operation of the IPM 250 and the motor driving. Also, the inverted power control signal 160 may be used to reconnect the disconnected main AC power to the home appliance.

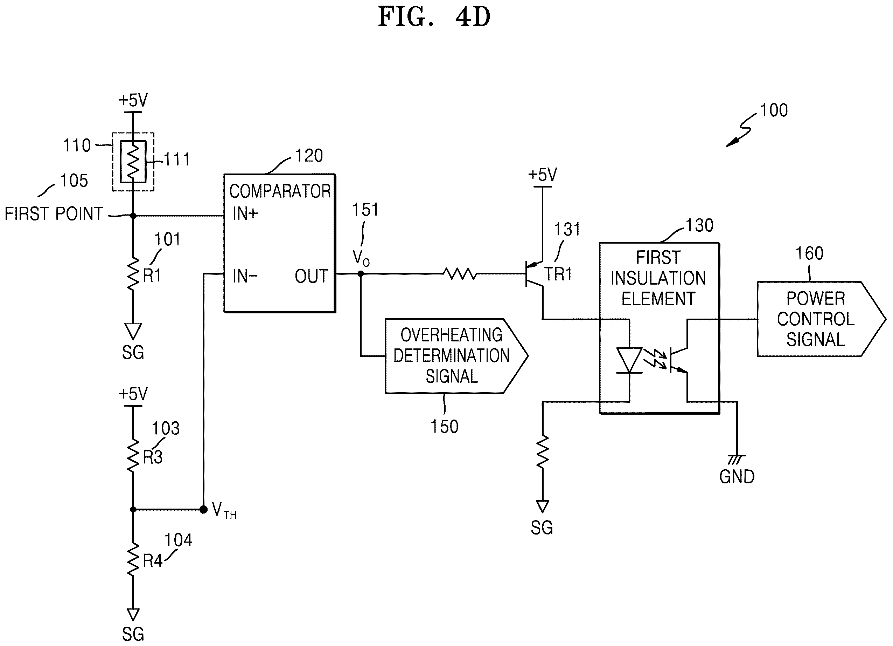

FIG. 4D illustrates an overheating prevention circuit according to an embodiment of the disclosure.

Unlike the overheating prevention circuit 100 illustrated in FIG. 4A, an overheating prevention circuit 100 illustrated in FIG. 4D may include a temperature sensor 110 that includes a PTC thermistor 111. Because the resistance of the PTC thermistor 111 increases as the temperature of the location at which the temperature sensor 110 is located increases, a distribution resistor 101 may be arranged between a first point 105 and a signal ground, and the PTC thermistor 111 included in the temperature sensor 110 may be arranged between a certain voltage (+5 V) terminal and the first point 105, as illustrated in FIG. 4D.

In FIG. 4D, only the positions of the distribution resistor 101 and the PTC thermistor 111 included in the temperature sensor 110 are interchanged with each other, and the other configurations may be the same as those in FIG. 4C and thus redundant descriptions thereof will be omitted for conciseness.

An overheating detection process for causing the V_{O} 151 to become low corresponding to an overheating detection event in the overheating prevention circuit 100 of FIG. 4D will be described below.

In FIG. 4D, the temperature sensor 110 may include a PTC thermistor 111. The resistance of the PTC thermistor 111 may increase when the temperature of the installed point of the PTC thermistor 111 increases. Thus, the voltage of the first point 105 may decrease when the temperature of the point at which the PTC thermistor 111 is installed increases. For example, it is assumed that the temperature determined as "overheating" at the position sensed by the PTC thermistor 111 is 125 °C and the resistance of the PTC thermistor 111 is 100 Ω in this case. If the distribution resistor 101 is 100 Ω, when the voltage of the first point 105 becomes 2.5V, it may become a certain threshold voltage determined as "overheating". Thus, 2.5V should be input to the first input IN- of the comparator 120. Thus, when the R3 103 and the R4 104 are equal to each other, V_{TH} may become 2.5 V. The V_{TH} may be referred to as a certain threshold voltage at which the temperature detected by the temperature sensor 110 is determined as "overheating".

In an embodiment, when the temperature of the location at which the PTC thermistor 111 included in the temperature sensor 110 is located is lower than 125 °C, because the voltage of the first point 105 is higher than +2.5 V, the output V_{O} 151 of the comparator 120 will not be a trigger, for example, "low". On the contrary, when the temperature of the location at which the PTC thermistor 111 is located is higher than or equal to 125 °C, because the voltage of the first point 105 becomes lower than +2.5 V, the output V_{O} 151 of the comparator 120 will be a trigger, for example, "low".

In an embodiment, when a temperature corresponding to overheating is sensed by the temperature sensor 110 and then a temperature lower than the temperature corresponding to overheating is sensed, the resistance of the PTC thermistor 111 may decrease and the voltage applied to the first point 105 may also increase. When the voltage applied to the first point 105 becomes higher than V_{TH}, the output V_{O} 151 of the comparator 120 may be inverted from "low" to "high". When the output V_{O} 151 of the comparator 120 becomes high, it may be an event signal for releasing the overheating prevention operation. As a signal inverted from the "low" overheating determination signal 150, the event signal for releasing the overheating prevention operation may be a signal for resuming the motor driving.

In FIG. 4D, when the output V_{O} 151 of the comparator 120 becomes high, the TR1 131 may be turned off and the power control signal 160 may be inverted through the first insulation element 130. The first insulation element 130 may be used to insulate the signal-level ground SG from the power-level ground GND. The inverted power control signal 160 may be a signal for resuming the main AC power supply of the home appliance.

Hereinafter, an overheating release process for causing the V_{O} 151 to change from "low" to "high" will be described.

In FIG. 4D, the temperature sensor 110 may include a PTC thermistor 111. The resistance of the PTC thermistor 111 may decrease when the temperature of the installed point of the PTC thermistor 111 decreases. For example, it is assumed that the temperature determined as "overheating" at the position sensed by the PTC thermistor 111 is 125 °C and the resistance of the PTC thermistor 111 is 100 Ω in this case. If the distribution resistor 101 is 100 Ω, when the voltage of the first point 105 becomes 2.5 V, it may become a certain threshold voltage determined as "overheating". Because 2.5 V is input to the first input IN- of the comparator 120, when the temperature at the position sensed by the PTC thermistor 111 becomes lower than 125 °C, the resistance of the PTC thermistor 111 may become lower than 100 Ω. When the resistance of the PTC thermistor 111 becomes lower than 100 Ω, the second input IN+ of the comparator 120 may become higher than a certain threshold voltage of 2.5 V and the V_{O} 151 may change from "low" to "high", thus starting an "overheating" release operation.

The start of the "overheating" release operation may mean that the overheating determination signal 150 is inverted from "low" to "high" and the power control signal 160 is also inverted. The inverted overheating determination signal 150 may be used as a signal for resuming the operation of the IPM 250 and the motor driving. Also, the inverted power control signal 160 may be used to reconnect the disconnected main AC power to the home appliance.

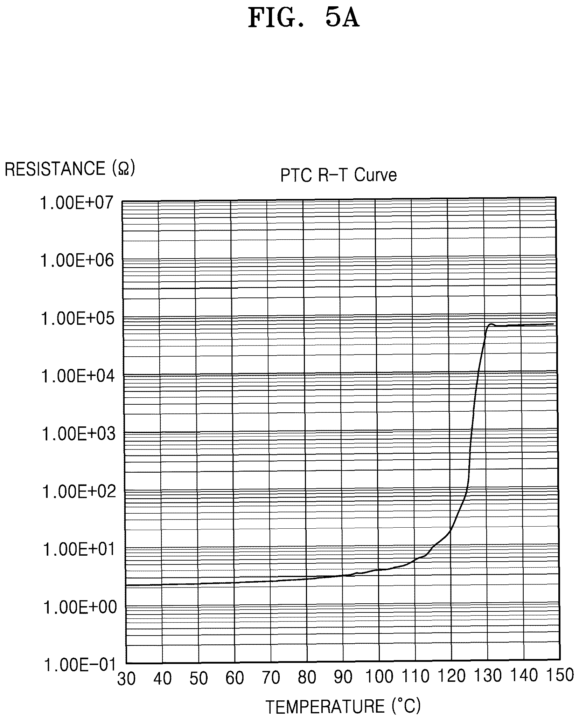

FIG. 5A is a characteristic curve graph of a thermistor as a temperature sensor used in an overheating prevention circuit of a home appliance according to an embodiment of the disclosure.

Referring to FIG. 5A, an R (resistance)-T (temperature) characteristic curve graph of the PTC thermistor 111 used as the temperature sensor 110 in the overheating prevention circuit 100 is illustrated. As illustrated in FIG. 5A, the PTC thermistor 111 may have a characteristic in which its resistance increases as its temperature increases. In particular, because the PTC thermistor 111 exhibits a significant resistance change due to a temperature change between 90 °C and 130 °C, it may be suitable to sense overheating through a resistance change, for example, a resistance increase, between 90 °C and 130 °C. Referring to FIG. 5A, it may be seen that the PTC thermistor 111 has a resistance value of about 20 Ω at 120 °C and about 30 kΩ at 130 °C.

The characteristics of the PTC thermistor 111 illustrated in FIG. 5A are merely an example, and a PTC thermistor having a different resistance value in a different temperature range may be used as necessary.

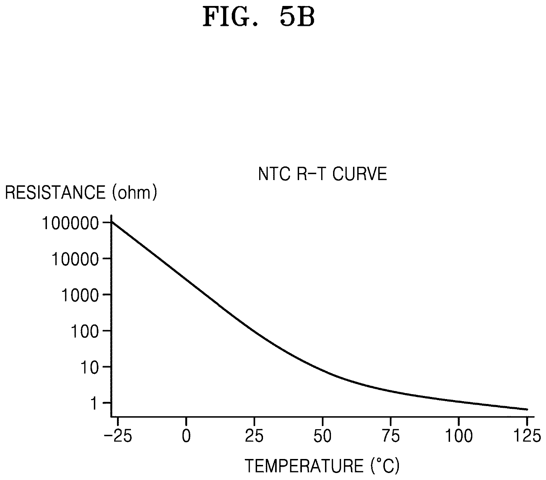

FIG. 5B is a characteristic curve graph of a thermistor as a temperature sensor used in an overheating prevention circuit of a home appliance according to an embodiment of the disclosure.

Referring to FIG. 5B, an R-T characteristic curve graph of the NTC thermistor 112 used as the temperature sensor 110 in the overheating prevention circuit 100 is illustrated. As illustrated in FIG. 5B, the NTC thermistor 112 may have a characteristic in which its resistance decreases as its temperature increases. In particular, because the NTC thermistor 112 exhibits a substantially uniform resistance change due to a temperature change between -25 °C and 125 °C, it may be suitable to sense overheating through a resistance change, for example, a resistance decrease, between -25 °C and 125 °C. For example, the NTC thermistor 112 may have a resistance value of 100 Ω at 25 °C and 3 Ω at 100 °C.

The characteristics of the NTC thermistor 112 illustrated in FIG. 5B are merely an example, and an NTC thermistor having a different resistance value in a different temperature range may be used as necessary.

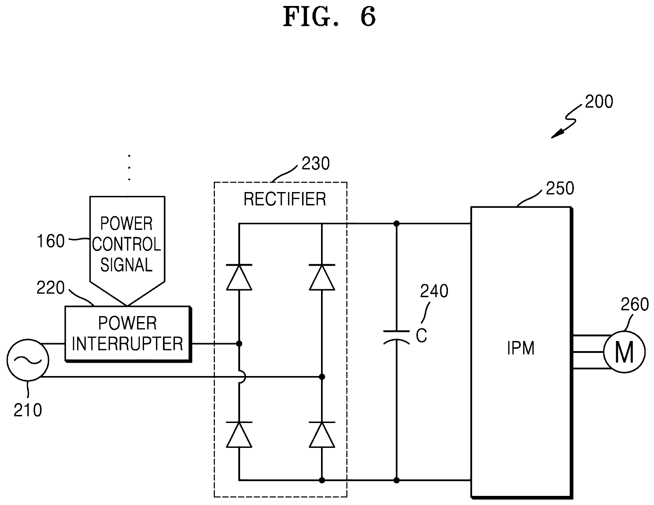

FIG. 6 illustrates a circuit for controlling input alternating current (AC) power connection based on an overheating determination according to an embodiment of the disclosure.

Referring to FIG. 6, a circuit of a driving device 200 of a home appliance is illustrated. According to an embodiment, the driving device 200 illustrated in FIG. 6 may include a rectifier 230 that rectifies input AC power 210. According to an embodiment, the driving device 200 may include a DC link capacitor 240 that smoothes the DC voltage rectified by the rectifier 230. According to an embodiment, the driving device 200 may include an IPM 250 that converts the DC voltage smoothed by the DC link capacitor 240 into a variable frequency or variable AC voltage through pulse width modulation (PWM) switching. In an embodiment, the driving device 200 may include a motor 260 that is driven by the AC voltage generated by the IPM 250. In an embodiment, the driving device 200 illustrated in FIG. 6 may further include a power interrupter 220 that may interrupt the connection between the input AC power 210 and the rectifier 230 when "overheating" occurs or may resume the connection between the input AC power 210 and the rectifier 230 when "overheating" is released.

In the overheating prevention circuit 100 illustrated in FIGS. 4A to 4D, when "overheating" occurs, the power control signal 160 may change from "high" to "low". In an embodiment, the power control signal 160 that has changed into "low" may cause the power interrupter 220 to interrupt the input AC power 210. However, this is merely an example, and when the circuit configuration is modified such that the power control signal 160 changes into "high", the driving device 200 may cause the power interrupter 220 to interrupt the input AC power 210 through the power control signal 160.

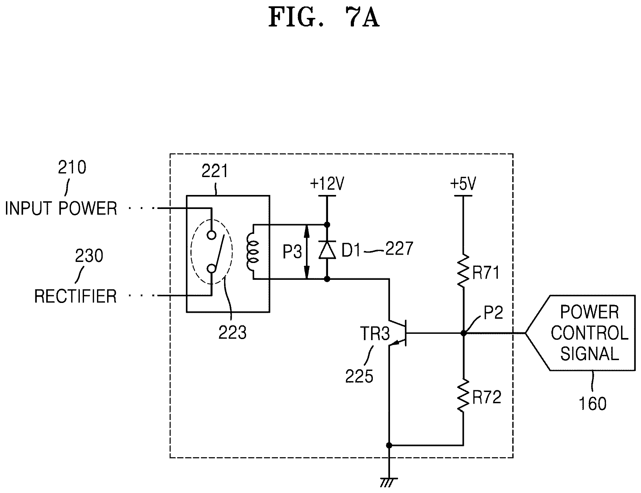

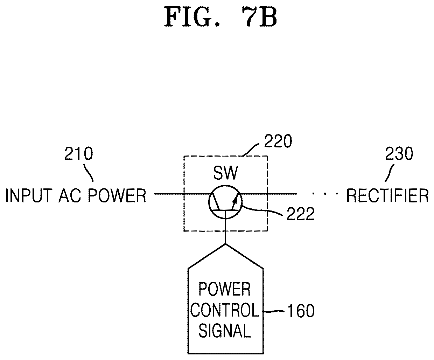

The operation of interrupting the power by the power interrupter 220 when the power control signal 160 becomes low will be described in more detail with reference to FIGS. 7A and 7B.

In an embodiment, when the "overheating" is released by the overheating prevention circuit 100 illustrated in FIGS. 4A to 4D, if the power control signal 160 is inverted from "low" to "high", the "high" power control signal 160 may become a control signal for allowing the power interrupter 220 to reconnect the input AC power 210 to the rectifier 230.

FIG. 7A is a circuit diagram illustrating an operation of controlling input AC power connection based on a power control signal according to an embodiment of the disclosure.

Referring to FIG. 7A, the power interrupter 220 may include a relay 221. In a "non-overheating" state, the home appliance including the driving device 200 driving the motor 260 may operate normally, and in this case, a switch 223 in the relay 221 may be turned on. In an embodiment, when the power control signal 160 becomes low, a TR3 225 may be turned off and a current may not flow in the coil according to the characteristics of the relay 221 and thus the switch 223 may be turned off to disconnect the connection between the input AC power 210 and the rectifier 230. Thus, when the temperature sensed by the temperature sensor 110 becomes a certain temperature determined as "overheating", the input AC power 210 input to the home appliance may be interrupted.

On the contrary, in an embodiment, when the temperature sensed by the temperature sensor 110 becomes lower than a certain temperature determined as "overheating" and thus "overheating" is no longer sensed, the power control signal 160 may change from "low" to "high". When the power control signal 160 changes from "low" to "high", the TR3 225 may be turned on and a current may flow again in the coil according to the characteristics of the relay 221 and thus the switch 223 may be turned on to connect the input AC power 210 to the rectifier 230.

FIG. 7B is a circuit diagram illustrating an operation of controlling input AC power connection based on a power control signal according to an embodiment of the disclosure.

Referring to FIG. 7B, the power interrupter 220 may include a switch 222. The switch 222 may be an electronic switch and may be a switch device controlled by a gate signal. The switch 222 may be, for example, a transistor, an IGBT, an FET, or a MOSFET but is not limited thereto. When the IPM 250 in the home appliance is not in an "overheated" state, the driving device 200 driving the motor 260 may operate normally and the switch 222 may be in an on state. In an embodiment, when the power control signal 160 becomes low, the switch 222 may be turned off to disconnect the connection between the input AC power 210 and the rectifier 230. Thus, when the temperature sensed by the temperature sensor 110 becomes a certain temperature determined as "overheating", the power control signal 160 may become low and thus the input AC power 210 input to the home appliance may be interrupted.

In an embodiment, on the contrary, when the home appliance changes from an "overheating" state to a "non-overheating" state, the power control signal 160 may be inverted from "low" to "high". When the power control signal 160 becomes high, the switch 222 may be turned on to connect the input AC power 210 to the rectifier 230. Thus, when the temperature sensed by the temperature sensor 110 decreases from a certain temperature determined as "overheating" to a "non-overheating" temperature, the power control signal 160 may change from "low" to "high" to restore the connection of the input AC power 210 that has been interrupted.

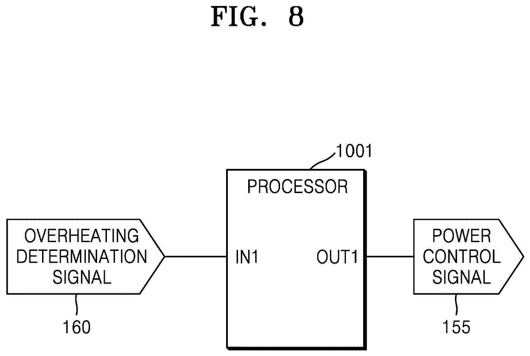

FIG. 8 is a diagram illustrating generating a power control signal based on an overheating determination signal according to an embodiment of the disclosure.

When overheating occurs in the home appliance, the input AC power 210 input to the home appliance may be interrupted by the power control signal 160 as illustrated in FIGS. 6, 7A, and 7B, to primarily protect the home appliance. However, even when the input AC power 210 is interrupted, the IPM 250 may continue to operate through the DC voltage remaining in the DC link capacitor 240 and thus overheating of the IPM 250 may last for a short time and there may be the possibility of the motor 260 malfunctioning. Thus, when the temperature sensor 110 detects "overheating," the operation of the IPM 250 and the driving of the motor 260 may also need to be stopped together.

Thus, in the home appliance according to an embodiment of the disclosure, the overheating determination signal 150 output by the comparator 120 according to detection of "overheating" may stop the operation of the IPM 250 and the motor 260. In an embodiment illustrated in FIG. 8, when the overheating determination signal 150 output by the comparator 120 according to detection of "overheating" by the temperature sensor 110 is input to a processor 1001 and the processor 1001 receives the overheating determination signal 150 and determines that "overheating" has occurred, the processor 1001 may output a power control signal 155 for controlling the voltage regulator. The output power control signal 155 may be used to interrupt the power used in the IPM 250 and the PBA 500 including the processor 1001.

However, as in FIG. 8, an operation of inputting the overheating determination signal 150 to the processor 1001 and generating the power control signal 155 by the processor 1001 may be skipped, and the overheating determination signal 150 may be directly used to interrupt the power used in the IPM 250. The reason why the overheating determination signal 150 is input to the processor 1001 and the processor 1001 generates the power control signal 155 is to allow the processor 1001 to perform various overheating-related operations by receiving the overheating determination signal 150. For example, the overheating-related operations that may be performed by the processor 1001 may include not only an operation of interrupting the voltage regulator operation to stop the operation of the IPM 250 or the processor 1001 but also an operation of notifying, through the display of the home appliance, the user that overheating has occurred or notifying a user terminal of an overheating warning message through a home network system or a communication interface of the home appliance.

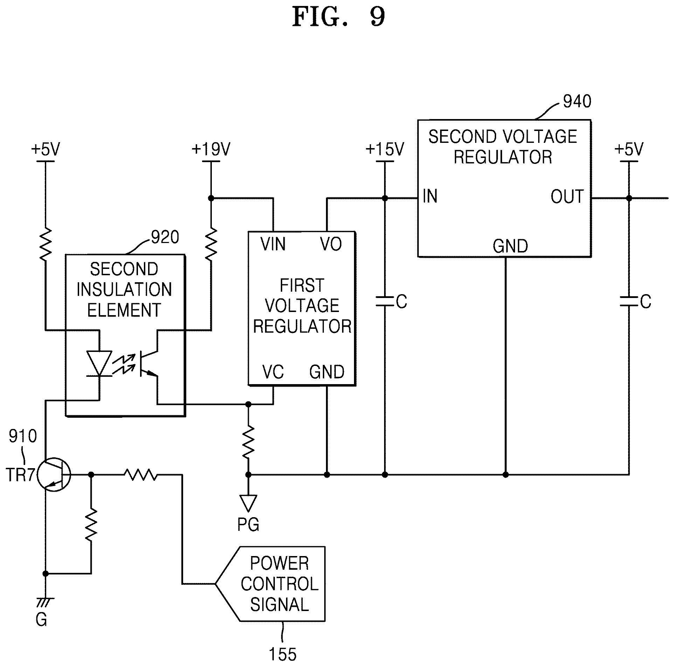

FIG. 9 is a circuit diagram for interrupting a voltage regulator operation upon detection of overheating according to an embodiment of the disclosure.

Referring to FIG. 9, according to an embodiment of the disclosure, the power control signal 155 output by the processor 1001 may turn on a TR7 910, and when the TR7 910 is turned on, a second insulation element 920, which is a photo coupler, may be turned on and thus +19 V may no longer be input to a first voltage regulator 930. The second insulation element 920 may insulate the processor 1001 from the first voltage regulator 930. The reason for insulating the processor 1001 from the first voltage regulator 930 is that the processor 1001 is a separate main microcomputer rather than an inverter microcomputer that operates the IPM 250 and therefore the main microcomputer and the inverter microcomputer need to be insulated from each other. In an embodiment, when the main microcomputer and the inverter microcomputer are not separately arranged but are configured as a single microcomputer and the single microcomputer includes the processor 1001, insulation through the second insulation element 920 may not be necessary.

The first voltage regulator 930 may output a voltage of 15 V, and the 15 V generated by the first voltage regulator 930 may be used as a gate voltage for driving the IPM 250. In FIG. 9, because +19 V is no longer input to the first voltage regulator 930 according to the power control signal 155 according to an embodiment of the disclosure, the first voltage regulator 930 will no longer output 15 V and thus the operation of the IPM 250 will be stopped.

In an embodiment, when the operation of the first voltage regulator 930 is stopped by the power control signal 155, the operation of a second voltage regulator 940, which outputs 5 V with an input of 15 V that is the output of the first voltage regulator 930, may also be stopped. When the operation of the second voltage regulator 940 is stopped, because the output of 5 V by the second voltage regulator 940 is stopped, the operation of the inverter microcomputer operating the IPM 250 may be stopped. In an embodiment, the inverter microcomputer operating the IPM 250 may include or may be the processor 1001, and in this case, insulation by the second insulation element 920 may not be required as described above.

According to an embodiment, when the output of 15 V by the first voltage regulator 930 is interrupted by the power control signal 155, the operation of the IPM 250 may be stopped, and when the output of 5 V by the second voltage regulator 940 is interrupted, the operation of the inverter microcomputer may be stopped and therefore the possibility of additional fire or component damage due to "overheating" may be significantly reduced. Also, when the inverter microcomputer also includes the processor 1001, the entire operation of the home appliance such as the washing machine 1 may be stopped and therefore the safety of the washing machine 1 against overheating may be further improved. The prevention of overheating by the power control signal 155 may significantly reduce the possibility of additional fire or component damage due to "overheating" while interrupting the connection between the home appliance and the input AC power 210 by the power control signal 160.

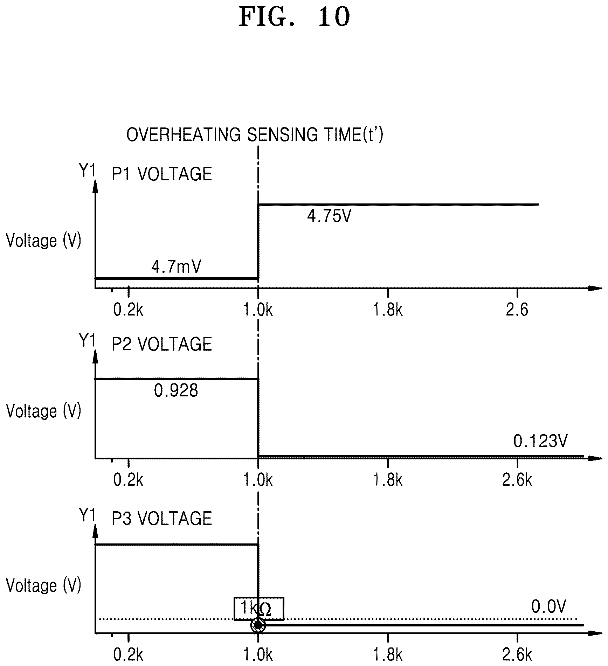

FIG. 10 is a waveform diagram of an overheating prevention operation according to an embodiment of the disclosure.

FIG. 10 is a waveform diagram illustrating a voltage change at a point P1 of FIG. 4A and points P2 and P3 of FIG. 7A. P3 may be a relay application voltage and may be the voltage across a D1 227 of FIG. 7A.

P1 of FIG. 4A may represent the voltage applied to an R9 109 from the first insulation element 130. When the temperature sensed by the temperature sensor 110 does not reach a temperature determined as "overheating", P1 may remain low, and when P1 is low, the power control signal 160 may remain in a high state. In an embodiment, at a time t' when the temperature sensed by the temperature sensor 110 is determined as "overheating" and thus the output V_{O} 151 of the comparator 120 in FIG. 4A becomes low, the TR1 131 may be turned on and P1 may become high. When P1 becomes high, the power control signal 160 may also be triggered to "low".

In FIG. 7A, when the power control signal 160 is high before becoming low, the TR3 225 may be turned on, and in this case, P3 representing the voltage (+12 V) applied to the relay 221 will also be high. However, at the time t' when the temperature sensed by the temperature sensor 110 is determined as "overheating" and thus the output V_{O} 151 of the comparator 120 in FIG. 4A becomes low, when the point P2 corresponding to the power control signal 160 becomes low, the TR3 225 may be turned off and thus P3 corresponding to the voltage applied to the relay 221 may also become low. When the voltage applied to the relay 221 becomes low, the relay 221 may not operate, for example, may be turned off, and thus the input AC power 210 to the home appliance may be interrupted.

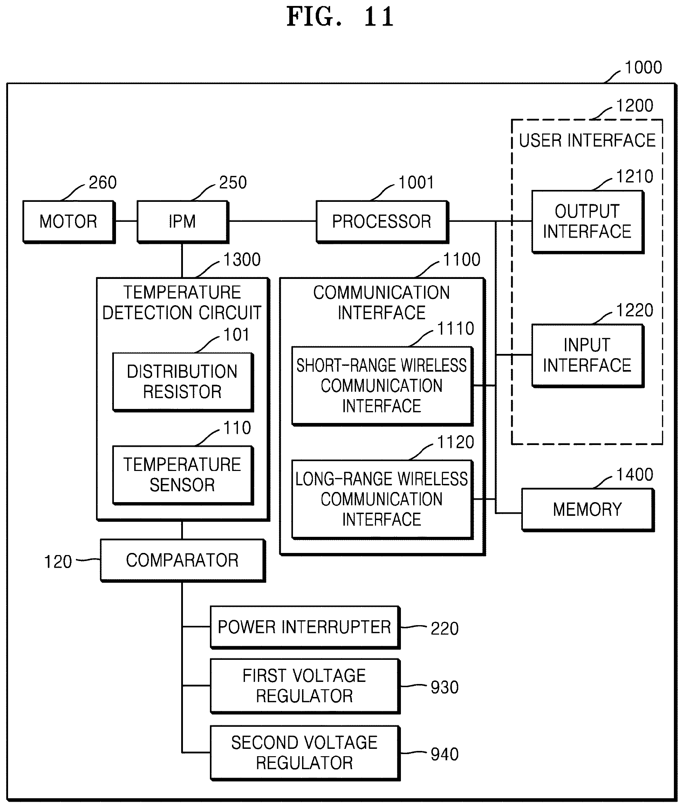

FIG. 11 is a block diagram of a home appliance according to an embodiment of the disclosure.

According to an embodiment of the disclosure, a home appliance 1000 illustrated in FIG. 11 may include a processor 1001, a communication interface 1100, a user interface 1200, and a memory 1400. According to an embodiment of the disclosure, the home appliance 1000 illustrated in FIG. 11 may further include a temperature detection circuit 1300, an IPM 250, a motor 260, a power interrupter 220, a first voltage regulator 930, and a second voltage regulator 940 for motor driving and overheating prevention operation. Throughout the disclosure, the processor 1001 may correspond to a "microcomputer (or inverter microcomputer and/or main microcomputer)". The processor 1001 may be a plurality of processors or may be a single processor. Also, throughout the disclosure, the temperature detection circuit 1300 may be at least a portion of the overheating prevention circuit 100.

The temperature detection circuit 1300 may detect the temperature of the location at which the temperature sensor 110 is installed. The temperature detection circuit 1300 may include a temperature sensor 110 and a distribution resistor 101 for distributing a certain input voltage. The temperature sensor 110 may be a thermistor whose resistance varies with temperature. Thermistor may be a PTC thermistor 111 or an NTC thermistor 112 depending on the circuit configuration. In the case where a certain input voltage is distributed by the distribution resistor 101 and the temperature sensor 110, when the resistance of the temperature sensor 110 varies according to the sensed temperature change, the voltage applied across the temperature sensor 110 may change, and when the applied voltage is input to the input IN- of the comparator 120, the comparator 120 may compare the input voltage with a certain threshold voltage input through the other input IN+, to output an event signal indicating that overheating has occurred. The event signal indicating that overheating has occurred may include an overheating determination signal 150 and a power control signal 160.

In an embodiment, based on the power control signal 160 generated by the comparator 120, the power interrupter 220 may operate to interrupte the input AC power 210 input to the home appliance 1000.

In an embodiment, the operation of the first voltage regulator 930 generating 15 V used to operate the IPM 250 and the operation of the second voltage regulator 940 generating 5 V that is a voltage used to operate the PBA including the processor 1001 may be stopped based on the overheating determination signal 150 generated by the comparator 120.

The home appliance 1000 may include a processor 1001. The processor 1001 may receive power through the second voltage regulator 940 that is a 5 V regulator and may control an overall operation of the home appliance 1000. In an embodiment, the temperature of a heating location at which the temperature sensor 110 is installed may be sensed through the temperature detection circuit 1300, and when it is determined that the heating location has been overheated, the processor 1001 may stop the operation of the IPM 250 and the motor 260, for example, by outputting a power control signal 155 signal for stopping the operation of the first voltage regulator 930 that is a 15 V regulator and/or the second voltage regulator 940 that is a 5 V regulator.

The processor 1001 may include various processing circuits and/or a plurality of processors. For example, the term "processor" as used herein, including in the claims, may include various processing circuits including at least one processor. In the at least one processor, one or more processors may be configured to individually and/or collectively perform various functions described herein in a distributed manner. As used herein, the "processor", "at least one processor", or "one or more processors" may be configured to perform various functions. However, these terms may cover, without limitation, a situation in which a processor may perform some of the functions and another processor or other processors may perform some others of the functions and a situation in which a single processor may perform all of the functions. Also, the at least one processor may include a combination of processors that perform various functions of the described functions in a distributed manner. The at least one processor may execute program instructions to achieve or perform various functions.

The processor 1001 may include a processor or may include a plurality of processors. The processor 1001 according to the disclosure may include at least one of a central processing unit (CPU), a graphics processing unit (GPU), an accelerated processing unit (APU), a Many Integrated Core (MIC), a digital signal processor (DSP), and a neural processing unit (NPU). The processor 1001 may be implemented in the form of an integrated system-on-chip (SoC) including one or more electronic components. When the processor 1001 includes a plurality of processors, each of the plurality of processors may be implemented as separate hardware (H/W). The processor 1001 may also be represented as a microprocessor controller (MICOM), a microprocessor unit (MPU), or a microcontroller unit (MCU). The processor 1001 according to the disclosure may be implemented as a single-core processor or may be implemented as a multicore processor.

The home appliance 1000 may optionally include a communication interface 1100 for communicating with an external device. For example, the home appliance 1000 may communicate with an external server (not illustrated) and/or a user terminal (not illustrated) through the communication interface 1100. In this case, the communication interface 1100 may communicate with the server through a first communication method (e.g., WiFi communication method) and communicate with the user terminal through a second communication method (e.g., BLE communication method).

The communication interface 1100 may include a short-range wireless communication interface 1110 and a long-range wireless communication interface 1120. The short-range wireless communication interface 1110 may include, but is not limited to, a Bluetooth communication interface, a Bluetooth Low Energy (BLE) communication interface, a near field communication (NFC) interface, a WLAN (WiFi) communication interface, a ZigBee communication interface, an infrared data association (IrDA) communication interface, a WiFi Direct (WFD) communication interface, an Ultra Wideband (UWB) communication interface, and/or an Ant+ communication interface. The long-range wireless communication interface 1120 may be used for the home appliance 1000 to remotely communicate with the server or the user terminal. The long-range wireless communication interface 1120 may include the Internet, a computer network (e.g., LAN or WAN), and/or a mobile communication interface. The mobile communication interface may include, but is not limited to, a 3G module, a 4G module, a 5G module, an LTE module, an NB-loT module, and/or an LTE-M module.

The communication interface 1100 may transmit data to the processor 1001 through, for example, a Universal Asynchronous Receiver/Transmitter (UART) protocol that is an asynchronous communication protocol; however, the communication method is not limited thereto.

The user interface 1200 of the home appliance 1000 may include an output interface 1210 and an input interface 1220. The input interface 1220 may be a unit by which the user may input a command to the home appliance 1000. The input interface 1220 may include, but is not limited to, a touch screen, a voice input, and/or a physical button. The input interface 1220 may include a washing start operation button, a drying start button, and/or a mode selection button. The output interface 1210 may include a display such as an LED, an LCD, and/or a touch screen. The output interface 1210 may further include, but is not limited to, a voice output unit. The output interface 1210 may display, but is not limited to, software update progress information, operation event information, overheating information, and information about whether overheating occurs at a certain point.

The memory 1400 of the home appliance 1000 may store a program (e.g., one or more instructions) for the processor 1001 to control an overall operation of the home appliance 1000 and may also store input/output data. For example, the memory 1400 of the home appliance 1000 may include, but is not limited to, software related to the control of the home appliance 1000, overheating status data, overheating history data, overheating position information data, error occurrence data (failure history data), and/or types of operation events. The memory 1400 of the home appliance 1000 may also store data received from an external user terminal.

The memory 1400 may include at least one type of storage medium from among flash memory type, hard disk type, multimedia card micro type, card type memory (e.g., SD or XD memory), random access memory (RAM), static random access memory (SRAM), read only memory (ROM), electronically erasable programmable read only memory (EEPROM), programmable read only memory (PROM), magnetic memory, magnetic disk, and optical disk. The programs stored in the memory 1400 may be classified into a plurality of modules according to the functions thereof.

The IPM 250 may be a power semiconductor device that may drive the motor 260 by PWM-switching a DC voltage obtained by rectifying the input AC power 210. The IPM 250 may include not only a switch but also a gate driver for switching the switch, and in some case, the IPM 250 may autonomously include a dead time compensation operation and an overheating prevention function.

The motor 260 is not limited to a motor driven by the PWM switching of the IPM 250. The motor 260 may include a three-phase motor. In the case of the washing machine 1 as an example of the home appliance 1000, the pulsator 40 or the drum 11 requiring rotation may be connected to the motor 260. However, this is a case where the home appliance 1000 is the washing machine 1, and when the home appliance 1000 is not the washing machine 1 but a refrigerator, the motor 260 may be a motor used in a compressor of the refrigerator, and when the home appliance 1000 is an air conditioner, the motor 260 may be a motor for rotating an outdoor unit fan. When the home appliance 1000 is a vacuum cleaner, the motor 260 may be a suction motor of the vacuum cleaner.

The home appliance 1000 according to an embodiment of the disclosure may include not only the washing machine 1 but also various home appliances that operate by driving the motor 260 by using the IPM 250. According to an embodiment, the home appliance 1000 according to an embodiment of the disclosure may include an air conditioner, a vacuum cleaner, and a refrigerator.

Not all of the components illustrated in FIG. 11 are essential components. The home appliance 1000 may be implemented by using more or fewer components than those illustrated in FIG. 11.

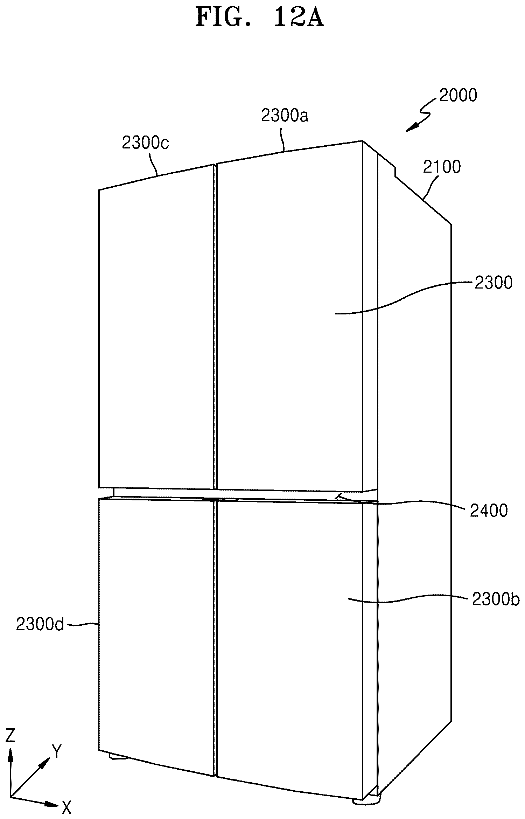

FIG. 12A is a perspective view of a refrigerator as a home appliance according to an embodiment of the disclosure.

The overheating prevention method according to the disclosure is not limited to the washing machine 1 and may be applied to various home appliances that use the IPM 250 and the motor 260.

FIG. 12A is a perspective view of a refrigerator 2000 as an example of the home appliance 1000 that uses the IPM 250 and the motor 260 while employing the overheating prevention method according to the disclosure.

The refrigerator 2000 according to an embodiment of the disclosure may include a main body 2100.

The main body 2100 may include an inner case, an outer case arranged outside the inner case, and an insulator arranged between the inner case and the outer case.

The "inner case" may include a case, a plate, a panel, or a liner forming a storage compartment. The inner case may be formed as a single body or may be formed by assembling a plurality of plates. The "outer case" may form the appearance of the main body and may be coupled outside the inner case such that the insulator is arranged between the inner case and the outer case.

The "insulator" may insulate the inside of the storage compartment from the outside of the storage compartment such that the temperature in the storage compartment may be maintained at a set suitable temperature without being affected by the environment outside the storage compartment. According to an embodiment, the insulator may include a foam insulator. The foam insulator may be formed by fixing the inner case and the outer case by a jig or the like and then injecting and foaming a urethane foam obtained by mixing polyurethane and a foam agent, between the inner case and the outer case.

According to an embodiment, the insulator may further include a vacuum insulator in addition to the foam insulator, or the insulator may include only the vacuum insulator instead of the foam insulator. The vacuum insulator may include a core and a shell that accommodates the core and seals the inside at a vacuum or near-vacuum pressure. The vacuum insulator may further include an adsorbent that adsorbs gas and moisture to maintain a stable vacuum state. However, the insulator is not limited to the foam insulator or the vacuum insulator described above and may include various materials that may be used for insulation.

According to an embodiment of the disclosure, the refrigerator 2000 may include a cold air supply device arranged to supply cold air to the storage compartment.

The "cold air supply device" may include a machine, a mechanism, an electronic device, and/or a system as a combination thereof that may generate cold air and guide the cold air to cool the storage compartment.

According to an embodiment, the cold air supply device may generate cold air through a refrigeration cycle including compression, condensation, expansion, and evaporation processes of a refrigerant. For this purpose, the cold air supply device may include a compressor, a condenser, an expansion device, and an evaporator that may drive a refrigeration cycle.

The refrigerator 2000 according to an embodiment of the disclosure may include a machine compartment in which at least some components belonging to the cold air supply device are arranged.

The "machine compartment" may be configured to be partitioned and insulated from the storage compartment to prevent the heat generated from the components arranged in the machine compartment from being transferred to the storage compartment. The inside of the machine compartment may be configured to communicate with the outside of the main body to radiate heat from the components arranged in the machine compartment.

The refrigerator 2000 may be a type of home appliance that supplies cold air generated by a compressor of a cooling air supply device to a storage compartment, to preserve various foods fresh for a long period. In addition to the long-term preservation function, the refrigerator 2000 may have various additional functions such as a communication function for configuring an loT network and a function for outputting sound through a speaker mounted on the refrigerator 2000.

Referring to FIG. 12A, the refrigerator 2000 according to an embodiment of the disclosure may include doors 2300a, 2300b, 2300c, and 2300d for opening/closing the main body 2100 and the storage compartment.

The refrigerator 2000 according to an embodiment of the disclosure may include a door 2300 configured to open/close the open side of the storage compartment.

In FIG. 12A, the refrigerator 2000 is illustrated as including four doors 2300; however, the number of doors 2300 is not limited thereto, and for example, an upper right door 2300a and a lower right door 2300b of the refrigerator 2000 may be configured as a single door and an upper left door 2300c and a lower left door 2300d of the refrigerator 2000 may be configured as a single door. Also, the refrigerator 2000 may include more or fewer than four doors. Also, the position of the door 2300 may be variously modified. Depending on the arrangement of the door 2300 and the storage compartment, the refrigerator 2000 may be a French door type refrigerator, a side-by-side type refrigerator, or the like. Between the doors 2300a, 2300b, 2300c, and 2300d, a handle area 2400 may be arranged as a space into which the user may put the hand to open/close the door 2300.

The door 2300 may be configured to seal the storage compartment when the door 2300 is closed. Like the main body 2100, the door 2300 may include an insulator to insulate the storage compartment when the door 2300 is closed.

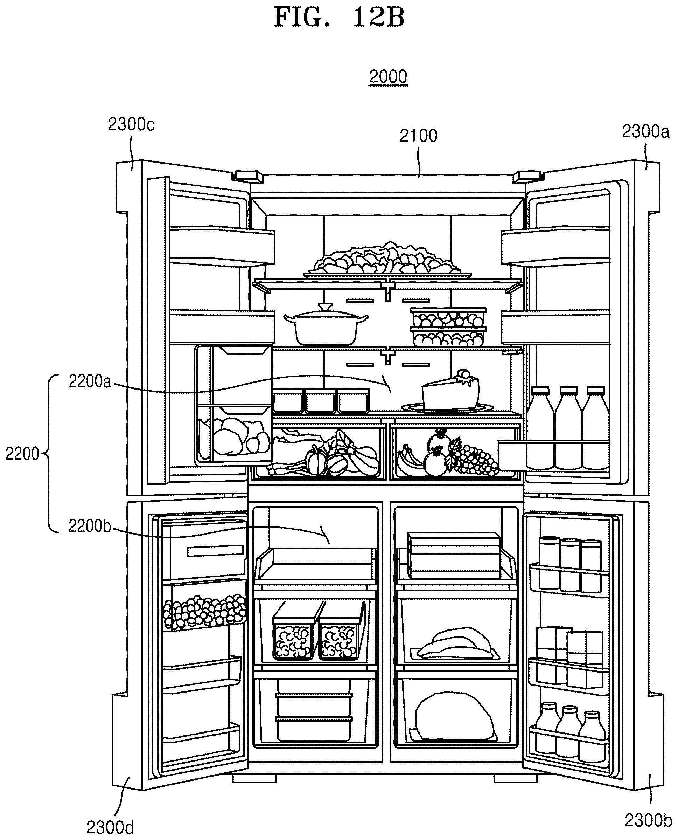

FIG. 12B is a front view illustrating the interior of a refrigerator as a home appliance according to an embodiment of the disclosure.

Referring to FIG. 12B, the main body 2100 of the refrigerator 2000 may include a storage compartment 2200 that may store various foods in a refrigerated or frozen state.

The storage compartment 2200 may include a space defined by the inner case. The storage compartment 2200 may further include an inner case defining the space. The storage compartment 2200 may be formed such that at least one side thereof is open to put in/out foods. The storage compartment 2200 may be configured to store foods. The foods may include edible or drinkable food, and particularly, may include meat, fish, seafood, fruit, vegetables, water, ice, drink, kimchi, or alcoholic drink such as wine. However, in addition to foods, the storage compartment 2200 may also store medicines or cosmetics, and there is no limitation on the items that are storable in the storage compartment 2200.

The refrigerator 2000 may include one or more storage compartments 2200. When two or more storage compartments are included in the refrigerator 2000, the respective storage compartments may have different purposes and may be maintained at different temperatures. For this purpose, the respective storage compartments may be partitioned from each other by a partition wall including an insulator. According to an embodiment, the partition wall may be a portion of the main body 2100. According to an embodiment, the partition wall may be a separate partition that is separately arranged from the main body 2100 and assembled to the main body 2100.

The storage compartment 2200 may be arranged to be maintained in a suitable temperature range according to the purpose thereof and may include a refrigeration compartment 2200a, a freezing compartment 2200b, or a variable-temperature compartment that is distinguished according to the purpose and/or temperature range thereof. The refrigeration compartment 2200a may be maintained at suitable temperature for refrigerating food, and the freezing compartment 2200b may be maintained at suitable temperature for freezing food. "Refrigeration" may mean cooling food to a temperature at which it is not frozen, and for example, the refrigeration compartment 2200a may be maintained in the range of about 0 °C to about +7 °C. "Freezing" may mean cooling food to freeze it or keep it frozen, and for example, the freezing compartment 2200b may be maintained in the range of about -20 °C to about -1 °C. The variable-temperature compartment may be used as either a refrigeration compartment or a freezing compartment, at the user's selection or regardless thereof. According to an embodiment, a storage compartment 2200 may be arranged such that a portion thereof is used as a refrigeration compartment 2200a and the other portion is used as a freezing compartment 2200b.

In addition to the names "refrigeration compartment 2200a", "freezing compartment 2200b", and "variable-temperature compartment", the storage compartment 2200 may also be referred to as various names such as "vegetable compartment", "fresh compartment", "cooling compartment", and "ice making compartment", and the terms "refrigeration compartment", "freezing compartment", and "variable-temperature compartment" used hereinafter should be construed as including storage compartments 2200 having corresponding purposes and temperature ranges respectively.

In the refrigerator 2000, the IPM 250 may have an important function of controlling the motor 260 for driving the compressor during compressor operation. The IPM 250 may need to have a function of protecting the IPM 250 from overheating when the IPM 250 overheats while driving the motor 260. Thus, like in the case of the washing machine 1 described above, the temperature detection circuit 1300 may be used to protect the refrigerator 2000 from overheating when the bottom surface of the IPM 250 overheats.

Thus, according to an embodiment of the disclosure, the temperature detection circuit 1300 may be used in the refrigerator 2000 to provide a high degree of freedom in the overheating sensing position and allow the user to freely set the overheating sensing temperature. By using the temperature detection circuit 1300 or the overheating prevention method, it may be possible to prevent in advance the damage to various components including the IPM 250 of the refrigerator 2000 and the occurrence and spread of fire and the user may more safely use the refrigerator 2000.

The temperature detection circuit 1300 and the overheating prevention method according to an embodiment of the disclosure may prevent in advance the fire, malfunction, and damage caused by overheating at a particular position of the refrigerator 2000, for example, the bottom surface of the IPM 250 and allow the user to more safely use the refrigerator 2000. Also, the overheating protection area of the refrigerator 2000 may be expanded by simultaneously interrupting the AC power 210 input to the refrigerator 2000 and interrupting the power of the IPM 250 and the PBA that drive the motor 260 of the refrigerator 2000, by using the temperature detection circuit 1300.

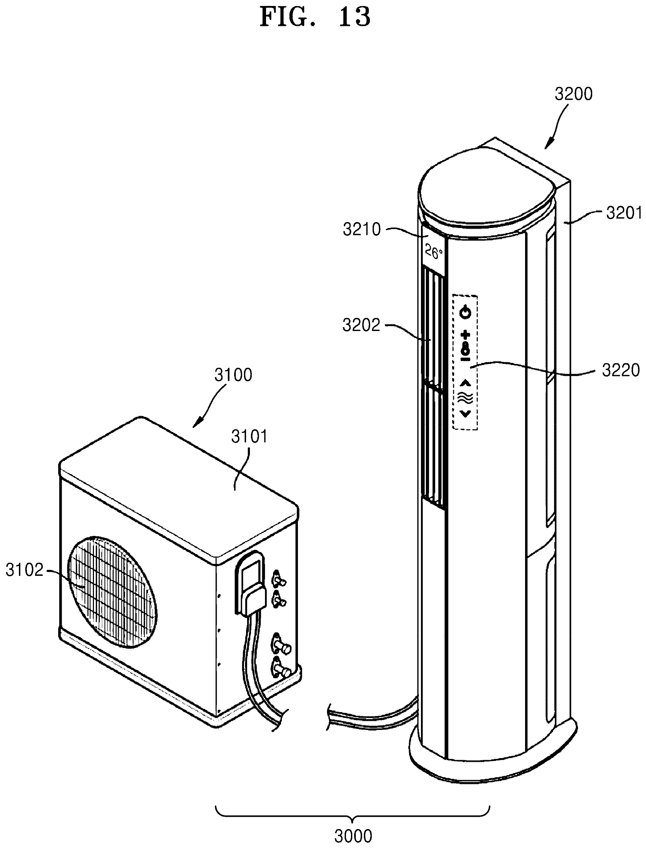

FIG. 13 is a perspective view illustrating an air conditioner as a home appliance according to an embodiment of the disclosure.

FIG. 13 illustrates an air conditioner 3000 as another example of the home appliance 1000 that uses the IPM 250 and the motor 260 while employing the overheating prevention method according to the disclosure.

The air conditioner 3000 according to an embodiment of the disclosure may absorb heat from an air-conditioning space (hereinafter referred to as "indoor space") and discharge the heat to the outside (hereinafter referred to as "outdoor space") of the air conditioning space in order to cool the air conditioning space. Also, the air conditioner 3000 may absorb heat from the outdoor space and discharge the heat to the indoor space in order to heat the indoor space.

The air conditioner 3000 may include one or more outdoor units 3100 installed in the outdoor space and one or more indoor units 3200 installed in the indoor space. The outdoor unit 3100 may be electrically connected to the indoor unit 3200. For example, the user may input information (or commands) for controlling the indoor unit 3200 through a user interface, and the outdoor unit 3100 may operate in response to the user input of the indoor unit 3200.

The outdoor unit 3100 may be fluidly connected to the indoor unit 3200 through a refrigerant pipe.

The outdoor unit 3100 may be arranged in the outdoor space. The outdoor unit 3100 may perform heat exchange between the refrigerant and the outdoor air by using a phase change (e.g., evaporation or condensation) of the refrigerant. In this case, the heat exchange may be achieved through an outdoor heat exchanger included in the outdoor unit 3100. For example, while the refrigerant is condensed in the outdoor unit 3100, the refrigerant may discharge heat to the outdoor air. While the refrigerant evaporates in the outdoor unit 3100, the refrigerant may absorb heat from the outdoor air.

The indoor unit 3200 may be arranged in the indoor space. The indoor unit 3200 may perform heat exchange between the refrigerant and the indoor air by using a phase change (e.g., evaporation or condensation) of the refrigerant. In this case, the heat exchange may be achieved through an indoor heat exchanger included in the indoor unit 3200. For example, while the refrigerant evaporates in the indoor unit 3200, the refrigerant may absorb heat from the indoor air to cool the indoor space. While the refrigerant condenses in the indoor unit 3200, the refrigerant may discharge heat to the indoor air to heat the indoor space. The air conditioner 3000 may include a compressor, an outdoor heat exchanger, an expansion device, and an indoor heat exchanger. The air conditioner 3000 may include a refrigerant pipe that connects the compressor, the outdoor heat exchanger, the expansion device, and the indoor heat exchanger to each other.

The refrigerant may circulate through the refrigerant pipe in the order of the compressor, the outdoor heat exchanger, the expansion device, and the indoor heat exchanger, or in the order of the compressor, the indoor heat exchanger, the expansion device, and the outdoor heat exchanger.

The compressor, the outdoor heat exchanger, and the expansion device may be arranged in the outdoor unit 3100. The indoor heat exchanger may be installed in the indoor unit 3200. The position of the expansion device is not limited to the outdoor unit 3100, and the expansion device may be arranged in the indoor unit 3200 as necessary.

The compressor may suction a refrigerant gas through a suction portion and compress the refrigerant gas. The compressor may discharge a high-temperature and high-pressure refrigerant gas through a discharge portion. According to an embodiment of the disclosure, the compressor may perform a compression operation by using the motor 260.

The air conditioner 3000 may further include a flow path switching valve. The flow path switching valve may include, for example, a four-way valve. The flow path switching valve may switch the circulation path of the refrigerant, depending on the operation mode (e.g., cooling operation or heating operation) of the air conditioner. The flow path switching valve may be connected to the discharge portion of the compressor.

The air conditioner 3000 may include an accumulator. The accumulator may be connected to the suction port of the compressor. The low-temperature and low-pressure refrigerant evaporated from the indoor heat exchanger or the outdoor heat exchanger may be introduced into the accumulator. When the refrigerant with a mixture of a refrigerant liquid and a refrigerant gas is introduced thereinto, the accumulator may separate the refrigerant liquid from the refrigerant gas and provide the refrigerant gas with the refrigerant liquid separated therefrom to the compressor.

In the outdoor heat exchanger, heat exchange may occur between the refrigerant and the outdoor air. For example, during the cooling operation, the high-pressure and high-temperature refrigerant may condense in the outdoor heat exchanger, and while the refrigerant condenses, the refrigerant may discharge heat to the outdoor air. During the heating operation, the low-temperature and low-pressure refrigerant evaporates in the outdoor heat exchanger, and while the refrigerant evaporates, the refrigerant may absorb heat from the outdoor air.

An outdoor fan may be installed near the outdoor heat exchanger. The outdoor fan may blow the outdoor air into the outdoor heat exchanger to promote the heat exchange between the refrigerant and the outdoor air.

The expansion device may lower the pressure and temperature of the refrigerant condensed in the outdoor heat exchanger during the cooling operation and may lower the pressure and temperature of the refrigerant condensed in the indoor heat exchanger during the heating operation.

The expansion device may lower the temperature and pressure of the refrigerant by using, for example, a throttling effect. The expansion device may include an orifice that may reduce the cross-sectional area of the flow path. The temperature and pressure of the refrigerant that has passed through the orifice may be lowered.

For example, the expansion device may be implemented as an electronic expansion valve that may adjust an opening ratio (the ratio of the cross-sectional area of the flow path of the valve in a partially opened state to the cross-sectional area of the flow path of the valve in a completely opened state). The amount of the refrigerant passing through the expansion valve may be controlled depending on the opening ratio of the electronic expansion valve.

The indoor unit 3200 of the air conditioner 3000 may include a housing, a blower for circulating air into or out of the housing, and an indoor heat exchanger for exchanging heat with the air flowing into the housing.

The housing may include a suction port. The indoor air may be introduced into the housing through the suction port.

The indoor unit 3200 of the air conditioner 3000 may include a filter arranged to filter off foreign substances in the air introduced into the housing through the suction port.

The housing may include a discharge port. The air flowing in the housing may be discharged to the outside of the housing through the discharge port.

The indoor unit 3200 of the air conditioner 3000 may include an airflow guide that guides the direction of the air discharged through the discharge port. For example, the airflow guide may include a blade located on the discharge port. For example, the airflow guide may include an auxiliary fan for controlling a discharge airflow. However, the disclosure is not limited thereto, and the airflow guide may be omitted.

The indoor unit 3200 of the air conditioner 3000 may include a flow path connecting the suction port to the discharge port. The flow path may be arranged to allow the air suctioned from the suction port to flow to the discharge port. A blower and an indoor heat exchanger may be arranged on the flow path.

The blower may include an indoor fan and a fan motor. For example, the indoor fan may include an axial fan, a mixed flow fan, a crossflow fan, and/or a centrifugal fan.

The indoor heat exchanger may be arranged between the blower and the discharge port or may be arranged between the suction port and the blower. The indoor heat exchanger may absorb heat from the air introduced through the suction port or may transmit heat to the air introduced through the suction port. The indoor heat exchanger may include a heat exchange tube through which the refrigerant flows and a heat exchange fin arranged to increase the heat transmission area.

The indoor unit 3200 of the air conditioner 3000 may include a drain tray arranged under the indoor heat exchanger to collect condensed water generated in the indoor heat exchanger. The condensed water accommodated in the drain tray may be drained to the outside through a drain hose. The drain tray may be arranged to support the indoor heat exchanger.

The indoor unit 3200 of the air conditioner 3000 may include a first controller that controls the components of the indoor unit 3200, including the blower and the like. The outdoor unit 3100 of the air conditioner 3000 may include a second controller that controls the components of the outdoor unit 3100, including the compressor and the like. The first controller may communicate with the second controller.

The first controller may obtain a user input through a remote controller and a user device such as a mobile device, and the indoor unit 3200 may include a communication interface or an infrared receiver that may communicate with the user device or the remote controller.

The first controller may control the components of the indoor unit 3200, including the blower and the like, in response to the received user input. The first controller may transmit information about the received user input to the second controller of the outdoor unit 3100. The second controller may control the components of the outdoor unit 3100, including the compressor and the like, based on the information about the user input received from the indoor unit 3200.

The first controller and the second controller may include a processor and a memory. The first controller and the second controller may provide a control signal to the compressor, the flow path switching valve, the expansion device, the outdoor fan, and the blower such that the air conditioner 3000 is driven in response to the user input.

The indoor unit 3200 of the air conditioner 3000 may include a display unit that displays operation information of the air conditioner 3000. The display unit may receive information about the operation of the air conditioner 3000 from the first controller and display information corresponding to the received information.

The display unit may include an indicator that indicates the operation type of the air conditioner 3000 selected by the user or information about whether the power of the indoor unit 3200 is turned on or off. The indicator may include, for example, a liquid crystal display (LCD) panel, a light emitting diode (LED) panel, and a plurality of LEDs.

In the air conditioner 3000, the motor 260 may be used to operate the compressor. Also, the IPM 250 may be used to drive the motor 260, and the air conditioner 3000 according to an embodiment of the disclosure may detect overheating of the bottom surface of the IPM 250 through the temperature sensor 110 to perform an overheating prevention operation.

Referring to FIG. 13, the air conditioner 3000 may include an outdoor unit 3100 including an outdoor heat exchanger arranged in an outdoor space to perform heat exchange between the outdoor air and the refrigerant, and an indoor unit 3200 including an indoor heat exchanger arranged in an indoor (home) space to perform heat exchange between the indoor air and the refrigerant.

The outdoor unit 3100 may include an outdoor unit main body 3101 forming the exterior of the outdoor unit 3100, and an outdoor unit fan 3102 arranged on one side of the outdoor unit main body 3101 to discharge the heat-exchanged air.

The indoor unit 3200 may include an indoor unit main body 3201 forming the exterior of the indoor unit 3200, an indoor unit discharge port 3202 arranged on the front surface of the indoor unit main body 3201 to discharging the heat-exchanged air, an input interface 3220 for receiving an operation command for the air conditioner 3000 from the user, and an output interface 3210 for displaying operation information of the air conditioner 3000.

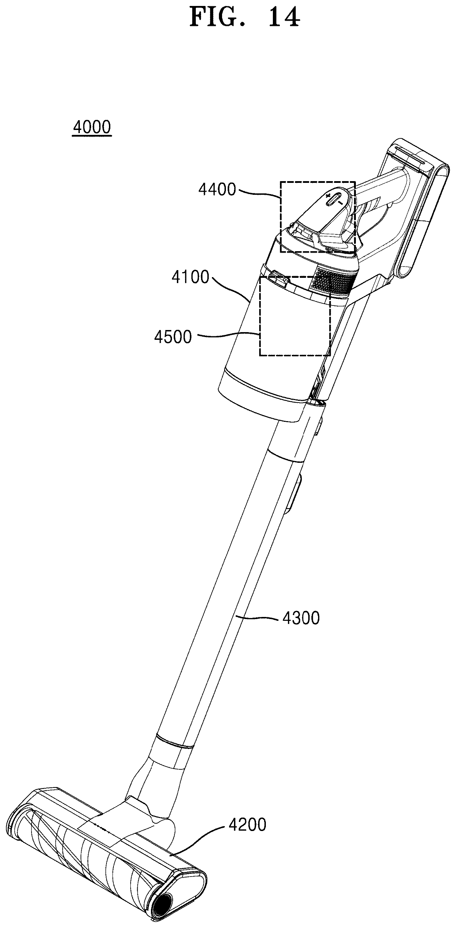

FIG. 14 is a diagram illustrating a vacuum cleaner as a home appliance according to an embodiment of the disclosure.

Referring to FIG. 14, the home appliance 1000 according to an embodiment of the disclosure may include a vacuum cleaner 4000. The vacuum cleaner 4000 may include a built-in rechargeable battery and may include a cordless vacuum cleaner that does not require a power cord to be connected to an outlet during cleaning. In an embodiment, the vacuum cleaner 4000 may include a corded vacuum cleaner that uses a power cord to be connected to an outlet during cleaning. For convenience of description, the description with reference to FIG. 14 will focus on a cordless vacuum cleaner. The user may move the vacuum cleaner 4000 back and forth by using a handle mounted on the main body of the vacuum cleaner, to allow a brush device (vacuum cleaner head) to suction dust or garbage from the surface to be cleaned.

Referring to FIG. 14, the vacuum cleaner 4000 according to an embodiment of the disclosure may be a stick-type vacuum cleaner including a vacuum cleaner main body 4100, a brush device 4200, and an extension tube 4300. However, not all of the components illustrated in FIG. 14 are essential components. The vacuum cleaner 4000 may be implemented by using more or fewer components than those illustrated in FIG. 14. For example, the vacuum cleaner 4000 may be implemented by using the vacuum cleaner main body 4100 and the brush device 4200, excluding the extension tube 4300. Also, the vacuum cleaner 4000 may further include a station (not illustrated) for dust discharge and battery charging of the vacuum cleaner main body 4100.

The vacuum cleaner 4000 may include a user interface 4400. The user interface 4400 may allow the user to selectively input the cleaning intensity during cleaning, and the charging status or the cleaning mode may be displayed through the display included in the user interface 4400.

A suction motor 4500 included in the main body 4100 of the vacuum cleaner 4000 may perform an operation of suctioning dust during cleaning. The suction motor 4500 may correspond to the motor 260 according to an embodiment of the disclosure and may be operated by the IPM 250. In the vacuum cleaner 4000 according to an embodiment of the disclosure, when overheating occurs on the bottom surface of the IPM 250, the overheating may be sensed through the temperature detection circuit 1300 and a prevention operation may be performed through the overheating prevention circuit 100 to stop the operation of the IPM 250. When the IPM 250 operation is stopped, the operation of the suction motor 4500 of the vacuum cleaner 4000 driven by the IPM 250 may also be stopped.

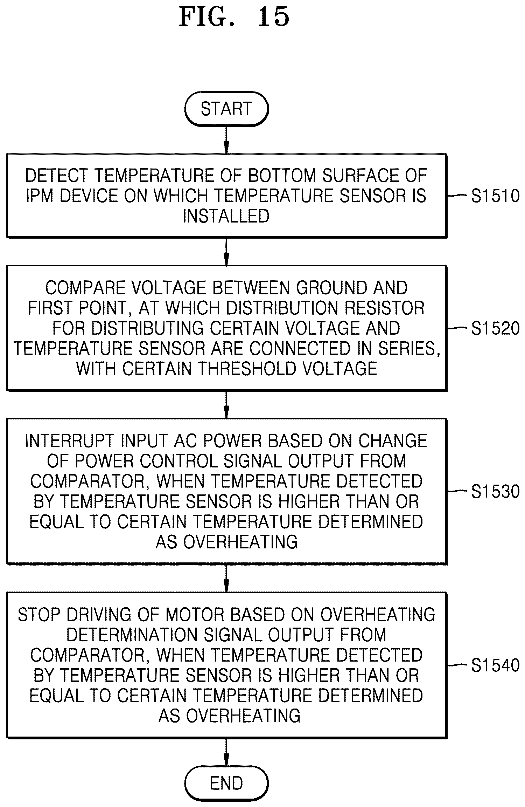

FIG. 15 is a flowchart illustrating an overheating prevention operation through a temperature sensor arranged on a bottom surface of an IPM device according to an embodiment of the disclosure.

In the home appliance according to an embodiment of the disclosure, the temperature sensor 110 may be arranged on the bottom surface of the IPM device 2500 in which the IPM 250 driving the motor 260 is packaged. The principle of arranging the temperature sensor 110 has been described with reference to FIG. 3B and thus will not be described herein.

In a method of preventing overheating through the temperature sensor 110 arranged on the bottom surface of the IPM device 2500, in operation S1510, the temperature sensor 110 installed on the bottom surface of the IPM device 2500 may detect the temperature of the location at which the temperature sensor 110 is installed. In an embodiment, when the temperature sensor 110 is installed on the bottom surface of an IPM device 2500, the temperature sensor 110 may be installed in a portion corresponding to a switch arranged at the bottom of a leg corresponding to the U phase that is closest to the bottom center surface of the IPM device 2500, among the legs corresponding to the U, V, and W phases of the IPM 250 (e.g., the U-phase leg may include a switch arranged on the upper U phase and a switch arranged on the lower U phase). The temperature sensor 110 may include a PTC thermistor 111 or an NTC thermistor 112.

In operation S1520, the overheating prevention method according to an embodiment of the disclosure may include an operation of comparing the voltage of the first point 105, which is the point at which the distribution resistor 101 for distributing a certain voltage and the temperature sensor 110 are connected in series, with a certain threshold voltage by the comparator 120. The certain threshold voltage may be a voltage corresponding to the temperature at which the bottom surface temperature of the IPM device 2500 sensed by the temperature sensor 110 is determined as "overheating". When the voltage of the first point 105 reaches the certain threshold voltage due to a resistance change of the temperature sensor 110, the comparator 120 may output an overheating prevention event signal. In an embodiment, a change in the output of the comparator 120 from "high" to "low" may be an "overheating" occurrence event.

In operation S1530, the overheating prevention method according to an embodiment of the disclosure may include an operation of interrupting the input AC power 210 of the home appliance 1000 based on a change in the power control signal 160 output from the comparator 120, for example, a change from "high" to "low" or vice versa, when the temperature detected by the temperature sensor 110 is higher than or equal to a certain temperature determined as overheating. Here, the input AC power 210 may be referred to as the main AC power input to the home appliance 1000. The method of interrupting the input AC power 210 has been described in detail with reference to FIGS. 6 to 7B and thus will not be described herein.

In operation S1540, the home appliance according to an embodiment of the disclosure may stop the operation of the motor 260 driven by the IPM 250, by stopping the operation of the IPM 250 based on the overheating determination signal 150 output from the comparator 120, when the temperature detected by the temperature sensor 110 is higher than or equal to a certain temperature determined as overheating. In operations S1530 and S1540, when overheating is sensed in the home appliance 1000, the home appliance 1000 may be doubly protected from overheating by not only interrupting the input AC power 210 but also stopping the operation of the IPM 250.

According to an embodiment of the disclosure, a home appliance with a temperature sensor arranged to prevent overheating of a power module is provided. The home appliance may include a motor and a power module including an inverter configured to drive the motor. In an embodiment, the home appliance may include a printed board assembly (PBA) including a processor configured to control the power module. In an embodiment, the PBA of the home appliance may include a distribution resistor configured to distribute a voltage level of a certain input voltage and a temperature sensor connected in series to the distribution resistor and configured to detect a temperature of a bottom surface of a power module device in which the power module is packaged, wherein the temperature sensor may be arranged at a location corresponding to a lower U-phase plate of the inverter on the bottom surface of the power module device.

In an embodiment, the temperature sensor may be arranged at a location at which the lower U-phase plate forms a boundary with an upper U, V, and W-phase plate of the inverter included in the power module.

In an embodiment, the lower U-phase plate corresponding to the location at which the temperature sensor is arranged may be located closer to a center portion of the power module device than a lower V-phase plate and a lower W-phase plate.

In an embodiment, the lower U-phase plate, the lower V-phase plate, and the lower W-phase plate may be separate plates.

In an embodiment, the upper U, V, and W-phase plate may be a single integrated plate.

In an embodiment, the temperature sensor may be arranged on the boundary of the lower U-phase plate while being closer to the lower U-phase plate than a driver integrated circuit (IC) block that outputs a gate signal in the power module.

In an embodiment, the temperature sensor may be mounted between the bottom surface of the power module device and a substrate surface of the PBA.

In an embodiment, the temperature sensor may include a positive temperature coefficient (PTC) thermistor or a negative temperature coefficient (NTC) thermistor whose resistance varies with temperature.

In an embodiment, the event signal for performing the overheating prevention operation may be used as a power control signal, and the PBA may include a power interrupter configured to interrupt alternating current (AC) power input to the home appliance, based on the power control signal.

In an embodiment, the power interrupter may include a relay, and the input AC power may be interrupted when the relay is turned off based on the power control signal.

In an embodiment, the comparator may invert the power control signal when a voltage between a first point and a ground becomes a certain overheating release voltage at which overheating is released, and the relay that has interrupted the input AC power may be turned on based on the inverted power control signal, to connect the input AC power to the home appliance.

In an embodiment, the power interrupter may include a switch, and the input AC power may be interrupted when the switch is turned off based on the power control signal.

In an embodiment, the event signal for performing the overheating prevention operation may be used as an overheating determination signal, and the processor may interrupt the driving of the motor based on the overheating determination signal.

In an embodiment, the processor that has received the overheating determination signal may stop the driving of the motor by stopping an operation of the power module.

In an embodiment, the processor that has received the overheating determination signal may output a signal for stopping an operation of a first voltage regulator generating a gate voltage of the power module.

In an embodiment, an operation of a second voltage regulator generating a voltage for operating the processor may also be stopped by stopping the operation of the first voltage regulator.

In an embodiment, the comparator may invert the overheating determination signal when a voltage between a first point and a ground becomes a certain overheating release voltage at which overheating is released, and an operation of the first voltage regulator may be resumed based on the inverted overheating determination signal.

In an embodiment, the comparator may receive a certain threshold voltage as a second input, compare a voltage between a first point and a ground with a certain threshold voltage, and output an event signal for performing an overheating prevention operation when a voltage of the first point is higher than the certain threshold voltage.

In an embodiment, the home appliance may include at least one of a washing machine, an air conditioner, a vacuum cleaner, and a refrigerator.

According to an embodiment of the disclosure, a method of preventing overheating of a home appliance including a power module is provided. The home appliance may include a motor and a power module including an inverter configured to drive the motor. According to an embodiment, the home appliance may include a printed board assembly (PBA) including a processor configured to control the power module, a temperature sensor on a bottom surface of a power module device in which the power module is packaged, and a comparator. According to an embodiment, the temperature sensor of the home appliance may be arranged at a location at which a lower U-phase plate of the inverter included in the power module forms a boundary with an upper U, V, and W-phase plate of the inverter included in the power module. According to an embodiment of the disclosure, the method of preventing overheating of the home appliance including the power module may include an operation of detecting a temperature of the bottom surface of the power module device on which the temperature sensor is installed. According to an embodiment, the method of preventing overheating of the home appliance including the power module may include an operation of comparing, by a comparator, a voltage between a first point, which is a point at which a distribution resistor configured to distribute a certain voltage and the temperature sensor are connected in series, and a ground with a certain threshold voltage. According to an embodiment, the method of preventing overheating of the home appliance including the power module may include an operation of interrupting input alternating current (AC) power based on a change of a power control signal output from the comparator, when the temperature detected by the temperature sensor is higher than or equal to a certain temperature determined as overheating. According to an embodiment, the method of preventing overheating of the home appliance including the power module may include an operation of stopping the driving of the motor based on an overheating determination signal output from the comparator, when the temperature detected by the temperature sensor is higher than or equal to a certain temperature determined as overheating.

The method according to an embodiment of the disclosure may be embodied in the form of program commands executable through various computer means, which may be recorded on a computer-readable recording medium. The computer-readable recording medium may include program commands, data files, and data structures either alone or in combination. The program commands recorded on the computer-readable recording medium may be those that are especially designed and configured for the disclosure, or may be those that are known and available to those of ordinary skill in computer software. Examples of the computer-readable recording medium include magnetic media such as hard disks, floppy disks, or magnetic tapes, optical media such as CD-ROMs or DVDs, and magneto-optical media such as floptical disks, and hardware devices such ROMs, RAMs, or flash memories specially configured to store and execute program commands. Examples of the program commands include machine language codes that may be generated by a compiler, and high-level language codes that may be executed by a computer by using an interpreter.

Some embodiments of the disclosure may also be implemented in the form of computer-readable recording mediums including instructions executable by computers, such as program modules executed by computers. The computer-readable recording mediums may be any available mediums accessible by computers and may include both volatile and non-volatile mediums and detachable and non-detachable mediums. Also, the computer-readable recording mediums may include computer storage mediums and communication mediums. The computer storage mediums may include both volatile and non-volatile and detachable and non-detachable mediums implemented by any method or technology for storage of information such as computer-readable instructions, data structures, program modules, or other data. The communication mediums may include any information transmission medium and may include other transmission mechanisms or other data of modulated data signals such as computer-readable instructions, data structures, program modules, or carriers. Also, some embodiments of the disclosure may be implemented as computer programs or computer program products including instructions executable by computers, such as computer programs executed by computers.

A machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment of the disclosure, the method according to various embodiments of the disclosure described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

## Claims

1. A home appliance comprising:
a motor;
a power module comprising an inverter configured to drive the motor; and
a printed board assembly (PBA) comprising a processor configured to control the power module, wherein the PBA comprises:
a distribution resistor configured to distribute a voltage level of a certain input voltage;
a temperature sensor connected in series to the distribution resistor and configured to detect a temperature of a bottom surface of a power module device in which the power module is packaged; and
a comparator configured to output an event signal for performing an overheating prevention operation by using a first point, at which the temperature sensor and the distribution resistor are connected in series, as a first input and comparing a voltage of the first point with a certain threshold voltage, wherein the temperature sensor is arranged at a location corresponding to a lower U-phase plate of the inverter on the bottom surface of the power module device.

2. The home appliance of claim 1, wherein the location at which the temperature sensor is arranged is a location at which the lower U-phase plate forms a boundary with an upper U, V, and W-phase plate of the inverter included in the power module.

3. The home appliance of claim 1 or 2, wherein the lower U-phase plate corresponding to the location at which the temperature sensor is arranged is located closer to a center portion of the power module device than a lower V-phase plate and a lower W-phase plate.

4. The home appliance of claim 3, wherein the lower U-phase plate, the lower V-phase plate, and the lower W-phase plate are separate plates.

5. The home appliance of any one of claims 2 to 4, wherein the upper U, V, and W-phase plate is a single integrated plate.

6. The home appliance of any one of claims 1 to 5, wherein the temperature sensor is arranged on the boundary of the lower U-phase plate while being closer to the lower U-phase plate than a driver integrated circuit (IC) block that outputs a gate signal in the power module.

7. The home appliance of any one of claims 1 to 6, wherein the temperature sensor is mounted between the bottom surface of the power module device and a substrate surface of the PBA.

8. The home appliance of any one of claims 1 to 7, wherein the event signal for performing the overheating prevention operation is used as a power control signal, and
the PBA comprises a power interrupter configured to interrupt alternating current (AC) power input to the home appliance, based on the power control signal.

9. The home appliance of claim 8, wherein the power interrupter comprises a relay, and
the input AC power is interrupted when the relay is turned off based on the power control signal.

10. The home appliance of claim 9, wherein the comparator inverts the power control signal when a voltage between the first point and a ground becomes a certain overheating release voltage at which overheating is released, and
the relay that has interrupted the input AC power is turned on based on the inverted power control signal, to connect the input AC power to the home appliance.

11. The home appliance of claim 8, wherein the power interrupter comprises a switch, and
the input AC power is interrupted when the switch is turned off based on the power control signal.

12. The home appliance of claim 8, wherein the event signal for performing the overheating prevention operation is used as an overheating determination signal, and
the processor interrupts the driving of the motor based on the overheating determination signal.

13. The home appliance of claim 12, wherein the processor that has received the overheating determination signal stops the driving of the motor by stopping an operation of the power module.

14. The home appliance of claim 13, wherein the processor that has received the overheating determination signal outputs a signal for stopping an operation of a first voltage regulator generating a gate voltage of the power module.

15. The home appliance of claim 14, wherein an operation of a second voltage regulator generating a voltage for operating the processor is also stopped by stopping the operation of the first voltage regulator.
